# EUROPEAN PATENT APPLICATION

(11) **EP 4 568 374 A1**
(43) Date of publication of application: **11.06.2025**
(21) Application number: 23849289.6
(22) Date of filing: 28.07.2023
(51) Int. Cl.: H04W 64/00

(54) **POSITIONING PROCESSING METHOD AND DEVICE AND TERMINAL**

(30) Priority: 02.08.2022 CN 202210923931
(71) Applicant: Vivo Mobile Communication Co., Ltd., Dongguan, Guangdong 523863 (CN)
(72) Inventor: SI, Ye, Dongguan, Guangdong 523863 (CN); WANG, Yuanyuan, Dongguan, Guangdong 523863 (CN); PAN, Xiang, Dongguan, Guangdong 523863 (CN)
(74) Representative: Winter, Brandl - Partnerschaft mbB
(86) International application number: PCT/CN2023/109773
(87) International publication number: WO 2024/027581

(57) **Abstract**

The present application relates to the technical field of communications, and discloses a positioning processing method and device and a terminal. The positioning processing method of embodiments of the present application comprises: a terminal controls a target positioning behavior according to a target configuration, wherein the target configuration comprises at least one of a first configuration and a second configuration; the first configuration comprises at least one of a DRX configuration of the terminal, an eDRX configuration of the terminal, and a time window configuration related to the target positioning behavior, the second configuration comprises a time domain configuration of a positioning reference signal related to the target positioning behavior, the period of the positioning reference signal is greater than a first duration, and the target positioning behavior comprises at least one of downlink positioning reference signal measurement, uplink positioning reference signal transmission, positioning measurement result reporting, and positioning triggering event detection.

## Description

### CROSS-REFERENCE TO RELATED APPLICATIONS

This application claims priority to Chinese Patent Application No. 202210923931.3, filed on August 02, 2022, which is incorporated herein by reference in its entirety.

### TECHNICAL FIELD

This application belongs to the field of communication technologies, and specifically relates to a positioning processing method and apparatus, and a terminal.

### BACKGROUND

With development of communication technologies, a power consumption requirement for terminal positioning is increasingly high, for example, low power and high accuracy positioning (Low Power and High Accuracy positioning, LPHAP), where low power and high accuracy positioning is an indispensable part of many applications, for example, asset tracking, vehicle tracking, and tool tracking in process automation. Currently, usually a corresponding positioning process is directly initiated based on various positioning requests of a terminal or a location service (Location Service, LCS) client, which may cause relatively high positioning power consumption of the terminal.

### SUMMARY

Embodiments of this application provide a positioning processing method and apparatus, and a terminal, which can resolve a problem of relatively high positioning power consumption of a terminal.

According to a first aspect, a positioning processing method is provided and is applied to a terminal, where the method includes:
controlling, by the terminal, a target positioning behavior according to a target configuration;
where the target configuration includes at least one of a first configuration and a second configuration, the first configuration includes at least one of a discontinuous reception (Discontinuous Reception, DRX) configuration of the terminal, an extended discontinuous reception (Extended Discontinuous Reception, eDRX) configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

According to a second aspect, a positioning processing apparatus is provided, where the apparatus includes:
a control module, configured to control a target positioning behavior according to a target configuration;
where the target configuration includes at least one of a first configuration and a second configuration, the first configuration includes at least one of a DRX configuration of the terminal, an eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

According to a third aspect, a terminal is provided. The terminal includes a processor and a memory. The memory stores a program or instructions capable of running on the processor, and when executed by the processor, the program or the instructions implement the steps of the method according to the first aspect.

According to a fourth aspect, a terminal is provided, including a processor and a communication interface, where the processor is configured to control a target positioning behavior according to a target configuration; where the target configuration includes at least one of a first configuration and a second configuration, the first configuration includes at least one of a DRX configuration of the terminal, an eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

According to a fifth aspect, a readable storage medium is provided. The readable storage medium stores a program or instructions, and when executed by a processor, the program or the instructions implement the steps of the method according to the first aspect.

According to a sixth aspect, a chip is provided. The chip includes a processor and a communication interface. The communication interface is coupled to the processor. The processor is configured to run a program or instructions to implement the steps of the method according to the first aspect.

According to a seventh aspect, a computer program/program product is provided. The computer program/program product is stored in a storage medium. The computer program/program product is executed by at least one processor to implement the steps of the method according to the first aspect.

In the embodiments of this application, a terminal controls a target positioning behavior according to at least one of a DRX configuration and an eDRX configuration of the terminal, a time window configuration related to the target positioning behavior, and a time domain configuration of a positioning reference signal related to the target positioning behavior, where a cycle of the positioning reference signal is greater than first duration, and the target positioning behavior includes at least one of downlink positioning reference signal measurement, uplink positioning reference signal sending, positioning measurement result reporting, and positioning triggered event detection, so that power consumption of terminal positioning can be reduced.

### BRIEF DESCRIPTION OF DRAWINGS

FIG. 1 is a schematic diagram of an eDRX configuration according to an embodiment of this application;
FIG. 2 is a block diagram of a wireless communication system applicable to an embodiment of this application;
FIG. 3 is a flowchart of a positioning processing method according to an embodiment of this application;
FIG. 4 is a structural diagram of a positioning processing apparatus according to an embodiment of this application;
FIG. 5 is a structural diagram of a communication device according to an embodiment of this application; and
FIG. 6 is a structural diagram of a terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that, terms used in this way may be interchangeable under appropriate circumstances, so that the embodiments of this application can be implemented in an order other than that illustrated or described herein. Moreover, the terms "first" and "second" typically distinguish between objects of one category rather than limiting a quantity of objects. For example, a first object may be one object or a plurality of objects. In addition, in the specification and claims, "and/or" represents at least one of connected objects, and the character "/" generally represents an "or" relationship between associated objects.

It should be noted that, a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often used interchangeably in the embodiments of this application. A technology described may be used for the systems and radio technologies described above, as well as other systems and radio technologies. The following describes a new radio (New Radio, NR) system for illustrative purposes, and NR terms are used in most of the following descriptions. However, these technologies may be also applicable to applications such as a 6th generation (6^{th} Generation, 6G) communication system other than NR system applications.

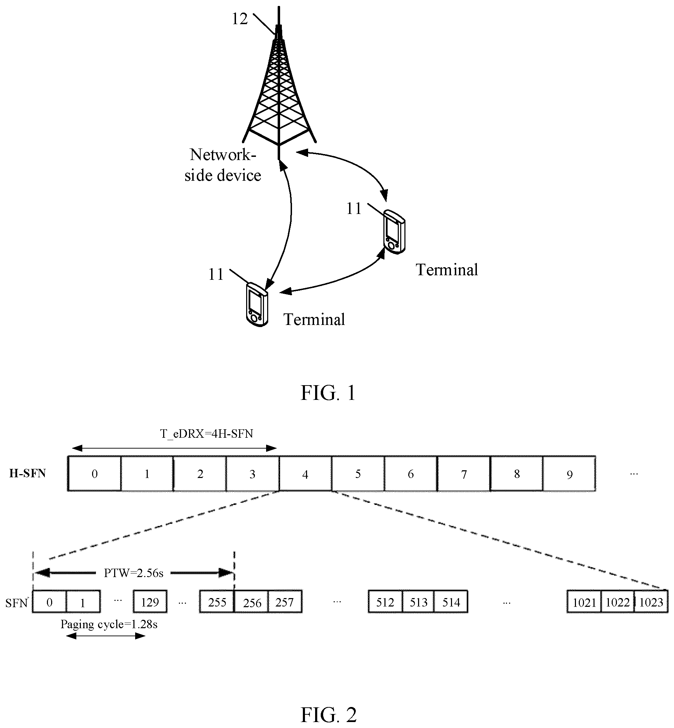

FIG. 1 is a block diagram of a wireless communication system applicable to an embodiment of this application. The wireless communication system includes a terminal 11 and a network-side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a laundry machine, or a furniture), a gaming console, a personal computer (personal computer, PC), a teller machine, a self-service machine, or another terminal-side device. The wearable device includes: a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in this embodiment of this application. The network-side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another suitable term in the field. The base station is not limited to a specific technical term, provided that the same technical effect is achieved. It needs to be noted that, in this embodiment of this application, a description is provided only by using a base station in an NR system as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

For ease of understanding, the following describes some content related to the embodiments of this application.

### Introduction to eDRX:

In the Release 17 (Release 17, R17) reduced capability (Reduced Capability, RedCap) project, for use cases (use case) with relatively relaxed requirements on downlink (Down Link, DL) reachability/latency, the network may configure an extended DRX cycle, which may reduce the UE power consumption substantially during periods with large enough packet inter-arrival time. Specifically, extended DRX cycles (namely, eDRX) are introduced for radio resource control (Radio Resource Control, RRC) idle state (idle state) (up to 10485.76 seconds, i.e., roughly 3 hours) and RRC inactive state (inactive state) (up to 10.24 seconds) as an optional feature for both RedCap and non-RedCap UEs.

FIG. 2 shows a typical eDRX configuration. As shown in FIG. 2, a UE monitors paging (paging) within a paging time window (Paging Time Window, PTW), and each PTW may include a plurality of paging cycles within one paging hyper system frame number (Hyper System Frame Number, H-SFN), where one H-SFN includes 1024 SFNs. The PTW is cyclic. The cycle is an eDRX cycle, in a unit of H-SFN.

### R17 inactive (inactive) positioning:

To reduce power consumption in positioning, the R17 phase standardizes positioning in an inactive state (inactive state). A UE may perform positioning when in an RRC inactive state (RRC_INACTIVE).

Any uplink LCS or LTE positioning protocol (LTE Positioning Protocol, LPP) message may be transmitted in RRC_INACTIVE.

If the UE initiates data transmission using uplink (Uplink, UL) small data transmission (Small Data transmission, SDT), the network may send DL LCS, LPP, and RRC messages (e.g., configuring a sounding reference signal (Sounding Reference Signal, SRS) for UL positioning) to the UE.

The UE may also receive a positioning reference signal (positioning reference signal, PRS) or send an SRS in RRC_INACTIVE.

For the UE in RRC_INACTIVE, support for all NR positioning measurement and support for an NR positioning method are extended, for example, an NR enhanced cell identity (Enhanced Cell-ID, E-CID), a time difference of arrival (Time Difference of Arrival, TDOA) in DL, an angle of departure (Angle of Departure, AOD) in DL, an angle-of-arrival (Angle-of-Arrival, AOA) in UL, a UL-TDOA, multi-round trip time (Multi-Round trip time, Multi-RTT), and a radio access technology-independent (RAT-independent) positioning method.

### Rel-18 low power and high accuracy positioning:

SA1 has introduced use cases and requirements for LPHAP for industrial Internet of Things scenarios. Low power and high accuracy positioning is an indispensable part of a considerable quantity of industrial applications. Examples of target applications for low power and high accuracy positioning are asset tracking, vehicle tracking, and tool tracking in process automation. The following table describes requirements for each LPHAP use case.

**Table 1 Low power and high accuracy positioning use cases**

| Use case (Use Case) # | Horizontal accuracy (Horizontal accuracy) | Corresponding service level (Corresponding service level) | Positioning interval/duty cycle (Positioning interval/duty cycle) | Battery life time/minimum operation time (battery life time/minimum operation time) |
|---|---|---|---|---|
| 1 | 10 m | Service level (Service Level) 1 | On request (on request) | 24 months |
| 2 | 2 m to 3 m | Service level 2 | < 4 seconds | > 6 months |
| 3 | < 1 m | Service level 3 | No indication (no indication) | One work shift (work shift) - 8 hours |
| 4 | < 1 m | Service level 3 | 1 second | 6 - 8 years |
| 5 | < 1 m | Service level 3 | 5 seconds - 15 minutes | 18 months |
| 6 | < 1 m | Service level 3 | 15 seconds to 30 seconds | 6 - 12 months |
| 7 | 30 cm | Service level 5 | 250 milliseconds | 18 months |
| 8 | 30 cm | Service level 5 | 1 second | 6 - 8 years |
| 9 | 10 m | Service level 1 | 20 minutes | 12 months |

Specific use cases are as follows:
Use Case#1. Process automation: vehicle tracking (outdoor).
Use Case#2. Process automation: asset tracking.
Use Case#3. Flexible modular assembly area: Tool tracking in the flexible modular assembly area of an intelligent factory.
Use Case#4. Process automation: Sequence container (internal logistics).
Use Case#5. Process automation: Palette tracking (for example, in turbine manufacturing).
Use Case#6. Flexible modular assembly area: Tracking of workpieces (indoor and outdoor) in an assembly area and a warehouse.
Use Case#7. Flexible modular assembly area: Allocation of tools in the flexible modular assembly area of an intelligent factory (allocation of tools to vehicles in a production line, left/right).
Use Case#8. Flexible modular assembly area: Positioning of a self-driving vehicle for monitoring purposes (vehicle queuing, distance of 1.5 m).
Use Case#9. (internal) logistics: asset tracking.

In R18, the positioning project focuses on research of Use Case#6. This use case requires an accuracy of 1 m, a positioning service interval of 15s to 30s, and a battery life of 6 to 12 months. In particular, the battery life poses a great challenge to terminal power saving (power saving).

R18 LPHAP poses a greater challenge to power consumption of terminal positioning, and therefore, energy saving performance in an idle state (idle state)/an inactive state (inactive state) needs to be further enhanced. In an idle state or an inactive state, an optional solution for reducing power consumption of a terminal is to increase a cycle during which a terminal measures a downlink positioning reference (such as a PRS), sends an uplink positioning reference signal (such as an SRS), and estimates and reports a position measurement result. Therefore, to increase the PRS/SRS configuration cycle, eDRX is introduced into positioning as an optional technical solution. However, in a case that eDRX is used in positioning, a behavior of measuring a downlink positioning reference signal or sending an uplink positioning reference signal by a UE in eDRX is not clear. For example, a PTW is configured in eDRX, and behaviors of the UE within and beyond the PTW are unknown. In addition, if a positioning reference signal with a larger cycle, for example, a cycle > 10.24s, is configured in positioning, a protocol is also affected. For example, a PRS or SRS cycle is extended to be > 10.24s, this certainly affects a cycle offset of the PRS/SRS, because a current cycle offset is defined in one H-SFN, and a reference point is based on SFNO. Therefore, an H-SFN offset needs to be introduced at least in cycle configuration to determine a specific H-SFN in which the PRS/SRS is located.

The following describes in detail a positioning processing method provided in embodiments of this application with reference to accompanying drawings by using some embodiments and application scenarios thereof.

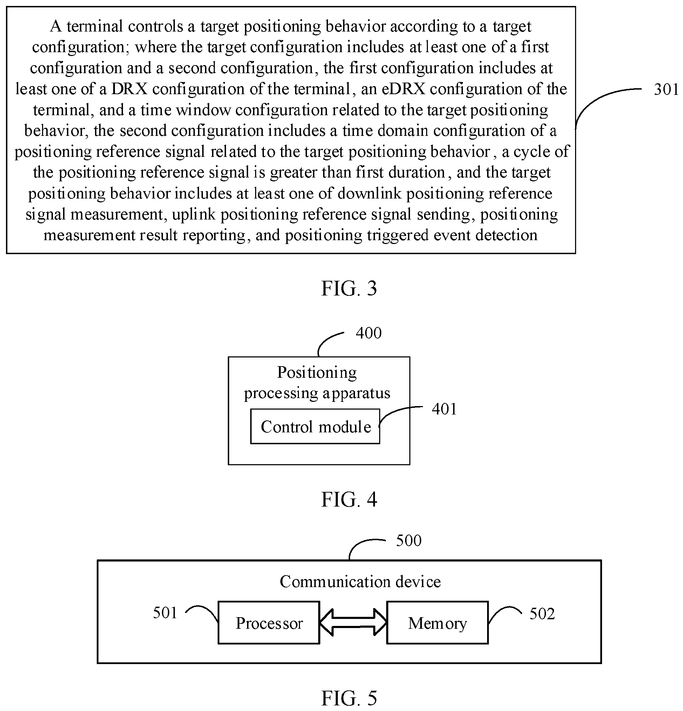

Referring to FIG. 3, FIG. 3 is a flowchart of a positioning processing method according to an embodiment of this application. The method may be performed by a terminal. As shown in FIG. 3, the method includes the following steps.

Step 301: The terminal controls a target positioning behavior according to a target configuration;
where the target configuration includes at least one of a first configuration and a second configuration, the first configuration includes at least one of a DRX configuration of the terminal, an eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

In this embodiment, the DRX configuration of the terminal may include but is not limited to a core network (Core Network, CN) DRX configuration, a radio access network (Radio Access Network, RAN) DRX configuration, and the like. The CN DRX configuration may be understood as a DRX configuration used for interaction between the terminal and a core network, and the RAN DRX configuration may be understood as a DRX configuration used for interaction between the terminal and an access network. For example, the DRX configuration of the terminal may include a DRX cycle and the like. The CN DRX configuration may be generally used by the terminal to monitor CN paging (paging), and the RAN DRX configuration may be generally used by the terminal to monitor RAN paging (paging).

The eDRX configuration of the terminal may include but is not limited to a CN eDRX configuration, a RAN eDRX configuration, and the like. The CN eDRX configuration may be understood as an eDRX configuration used for interaction between the terminal and the core network, and the RAN eDRX configuration may be understood as an eDRX configuration used for interaction between the terminal and the access network. For example, the eDRX configuration of the terminal may include an eDRX cycle and the like.

The time window related to the target positioning behavior may include but is not limited to at least one of a PTW, a PRS measurement window, an SRS sending window, or a positioning behavior performing window. The time window configuration may include at least one of a start point, a length, an end point, a cycle, and the like of the time window. In some optional embodiments, the start point of the time window may include at least one of a hyper frame offset, a system frame offset, a subframe (subframe) offset, a slot (slot) offset, and the like, indicating an offset of the start point of the time window from a slot 0 of a system frame 0 of a hyper frame 0. In some optional embodiments, a cycle of the time window may be greater than a specific time threshold, such as 10.24s.

The target positioning behavior includes at least one of downlink positioning reference signal measurement, uplink positioning reference signal sending, positioning measurement result reporting, and positioning triggered event detection. The downlink positioning reference signal may be a reference signal for downlink positioning, for example, may include but is not limited to at least one of a PRS, a channel state information reference signal (Channel State Information Reference Signal, CSI-RS), a demodulation reference signal (Demodulation Reference Signal, DMRS), a tracking reference signal (Tracking Reference Signal, TRS), a synchronous signal block (Synchronous Signal Block, SSB), and the like. The uplink positioning reference signal may be a reference signal for uplink positioning, for example, may include at least one of an SRS for positioning (SRS For positioning), an SRS for multiple-input multiple-output (Multiple-Input Multiple-Output, MIMO) (SRS For MIMO), an SRS, a UL DMRS, a physical random access channel (Physical Random Access Channel, PRACH), and the like.

The positioning triggered event detection may also be referred to as positioning triggered event monitoring. For example, in a case that the terminal needs to perform a periodic or event-triggered positioning procedure (such as Periodic and Triggered 5GC-MT-LR Procedure or Low Power Periodic and Triggered 5GC-MT-LR Procedure, where the terminal monitors the period or the event, and performs positioning reporting or initiates a corresponding positioning procedure), the terminal detects a positioning triggered event (triggered event), and initiates a positioning behavior corresponding to the positioning triggered event in a case that the positioning triggered event is detected.

Optionally, that the terminal detects a triggered event includes: For a periodic or triggered positioning request, the terminal detects occurrence of a requested triggered event or a periodic event. For a regional event or a motion event in a triggered event, the UE performs monitoring at a sampling interval equal to or less than a maximum event sampling interval. When any one of the following cases occurs, the UE detects that a positioning event is triggered: (i) A requested regional event or motion event has been detected, and a minimum reporting time interval has passed since a last report (if this is not the first event report); (ii) a requested periodic location event has occurred; and (iii) a maximum reporting time of a regional event or motion event has expired.

Optionally, the positioning behavior initiated by the terminal after detecting the positioning triggered event includes at least one of the following: reporting event information, reporting a downlink measurement result, performing one-time uplink positioning, performing one-time downlink positioning, performing one-time uplink and downlink positioning (such as an RTT), and requesting an uplink positioning configuration.

For example, for the downlink positioning reference signal measurement, the positioning reference signal related to the target positioning behavior may include a downlink positioning reference signal. For the uplink positioning reference signal sending, the positioning reference signal related to the target positioning behavior may include an uplink positioning reference signal. For the positioning measurement result reporting, a positioning reference signal related thereto may include a downlink positioning reference signal. The time domain configuration of the positioning reference signal may include but is not limited to at least one of a cycle of the positioning reference signal, a time domain offset of the positioning reference signal, time domain information of the positioning reference signal, and the like. The first duration may be agreed upon by a protocol, indicated by a network-side device, preconfigured by the terminal, or the like. For example, the first duration may be equal to or greater than 10.24 seconds. A specific value of the first duration is not limited in this embodiment.

That the terminal controls the target positioning behavior according to the target configuration, for example, may include that the terminal determines, according to the first configuration, whether to perform the target positioning behavior, or determines, according to the first configuration, a cycle for performing the target positioning behavior, or performs the target positioning behavior according to the second configuration.

According to the positioning processing method provided in this embodiment of this application, a terminal controls a target positioning behavior according to at least one of a DRX configuration and an eDRX configuration of the terminal, a time window configuration related to the target positioning behavior, and a time domain configuration of a positioning reference signal related to the target positioning behavior, where a cycle of the positioning reference signal is greater than first duration, and the target positioning behavior includes at least one of downlink positioning reference signal measurement, uplink positioning reference signal sending, positioning measurement result reporting, and positioning triggered event detection. Compared with directly initiating corresponding positioning processes for all positioning requests, power consumption of terminal positioning can be reduced.

Optionally, the target configuration includes the first configuration; and
that the terminal controls a target positioning behavior according to a target configuration includes at least one of the following:
the terminal determines, according to the first configuration, whether to perform the target positioning behavior; and
the terminal determines, according to the first configuration, a first cycle for performing the target positioning behavior.

In an implementation, the terminal may determine, according to the first configuration, whether to perform the target positioning behavior. For example, in a case that the first configuration includes at least one of a DRX configuration and an eDRX configuration, the terminal may determine, according to the first configuration, whether to perform the target positioning behavior beyond a PTW, where the PTW may include at least one of a CN PTW, a RAN PTW, and the like. Correspondingly, beyond the PTW may include beyond the CN PTW, beyond the RAN PTW, beyond the CN PTW and beyond the RAN PTW, and the like. The CN PTW may refer to a PTW used by the CN to perform paging, and the RAN PTW may refer to a PTW used by the RAN to perform paging. Alternatively, in a case that the first configuration includes the time window configuration related to the target positioning behavior, the terminal may determine, according to the time window configuration related to the target positioning behavior, whether to perform the target positioning behavior. For example, the terminal determines to perform the target positioning behavior within the time window related to the target positioning behavior, and does not perform the target positioning behavior beyond the time window related to the target positioning behavior.

Optionally, whether the terminal performs the target positioning behavior may be indicated by the network-side device (for example, the network indicates that the terminal may or may not perform the target positioning behavior beyond the PTW), agreed upon by a protocol, or determined by the terminal by selecting at least one manner.

It should be noted that for different target positioning behaviors, for example, the downlink positioning reference signal measurement and the uplink positioning reference signal sending, specific implementations in which the terminal determines, according to the first configuration, whether to perform the corresponding target positioning behaviors may be the same or different. For example, in a case that the terminal is in an idle state, if the terminal is configured with CN eDRX and a cycle of the CN eDRX is greater than second duration, the terminal is not expected to perform the downlink positioning reference signal measurement beyond a CN PTW, and the terminal may perform the uplink positioning signal sending beyond the CN PTW.

Optionally, when the target positioning behavior is that the terminal monitors and detects a triggered event (triggered event) and initiates a corresponding positioning behavior, the terminal may determine, according to the first configuration, whether to perform the target positioning behavior beyond a PTW. For example, beyond the PTW, the terminal is not expected to monitor and/or detect a triggered event.

In some optional embodiments, for different target positioning behaviors, behaviors of controlling the target positioning behaviors by the terminal according to the target configuration may be different. For example, for a target positioning behavior 1 (for example, the downlink positioning reference signal measurement), a behavior of controlling the target positioning behavior by the terminal according to the target configuration is determining, according to the first configuration, whether to perform the target positioning behavior, and determining, according to the first configuration, the first cycle for performing the target positioning behavior. For a target positioning behavior 2 (for example, the positioning triggered event detection), a behavior of controlling the target positioning behavior by the terminal according to the target configuration is determining, according to the first configuration, whether to perform the target positioning behavior without needing to determine the first cycle for performing the target positioning behavior. Alternatively, for different target positioning behaviors, the terminal controls the target positioning behaviors according to different target configurations. For example, for the target positioning behavior 1 (for example, the downlink positioning reference signal measurement), the terminal controls the target positioning behavior according to at least one of the DRX configuration/the eDRX configuration. For the target positioning behavior 2 (such as the uplink positioning reference signal sending), the terminal controls the target positioning behavior according to the time window related to the target positioning behavior.

In another implementation, the terminal may determine, according to the first configuration, the first cycle for performing the target positioning behavior. For example, in a case that the first configuration includes at least one of the DRX configuration and the eDRX configuration, the first cycle may be determined according to at least one of a DRX cycle and an eDRX cycle, where the DRX cycle may include at least one of a CN DRX cycle and a RAN DRX cycle, and the eDRX cycle may include at least one of a cycle of the CN eDRX and a cycle of the RAN eDRX. Alternatively, in a case that the first configuration includes the time window configuration related to the target positioning behavior, a cycle corresponding to the time window configuration may be used as a cycle of the target positioning behavior.

In some optional embodiments, within and beyond the time window related to the target positioning behavior may correspond to different cycles. Correspondingly, the terminal may respectively perform the target positioning behavior within and beyond the time window related to the target positioning behavior by using the different cycles.

In some optional embodiments, the first cycle for performing the target positioning behavior by the terminal may be related to the target cycle. For example, the first cycle for performing the target positioning behavior by the terminal includes at least one of the following: the target cycle and a second cycle calculated according to the target cycle.

In another implementation, the terminal may determine, according to the first configuration, whether to perform the target positioning behavior, and may determine, based on the first configuration, the first cycle for performing the target positioning behavior, so that the terminal may control performing of the target positioning behavior based on the first cycle. The terminal may perform the target positioning behavior once in each first cycle, or the terminal may perform the target positioning behavior at most once in each first cycle, or the terminal may perform the target positioning behavior at least once in each first cycle.

In some optional embodiments, the terminal may determine, in an idle state or an inactive state according to the first configuration, whether to perform the target positioning behavior, and/or determine, according to the first configuration, the first cycle for performing the target positioning behavior.

In some optional embodiments, whether the terminal determines, according to the first configuration, whether to perform the target positioning behavior, and/or determines, according to the first configuration, the first cycle for performing the target positioning behavior may be indicated by the network-side device.

Optionally, that the terminal determines, according to the first configuration, whether to perform the target positioning behavior includes:
in a case that the terminal is in an idle state or an inactive state, if the terminal is configured with a time window related to the target positioning behavior, the terminal is not expected to perform the target positioning behavior beyond the time window.

That the terminal is not expected to perform the target positioning behavior beyond the time window may be referred to as that the terminal does not expect to perform the target positioning behavior beyond the time window, or may be referred to as that the terminal is not requested to perform the target positioning behavior beyond the time window, or may be referred to as that the terminal is not to perform the target positioning behavior beyond the time window, and so on.

In some optional embodiments, in a case that the terminal is in an idle state or an inactive state, if the terminal is configured with a time window related to the target positioning behavior, the terminal may perform the target positioning behavior within the time window.

It should be noted that in a case that the terminal is in an idle state or an inactive state, the terminal is configured with the target configuration, where the target configuration is not limited to being received by the terminal in which state, for example, being received in an idle state or an inactive state, or being received when a connected state is released, or being received in a connected state.

Optionally, that the terminal determines, according to the first configuration, whether to perform the target positioning behavior includes:
in a case that the terminal is in an idle state, if the terminal is configured with CN eDRX, and a cycle of the CN eDRX is greater than second duration, the terminal is not expected to perform the target positioning behavior beyond a CN PTW.

That the terminal is configured with the CN eDRX may be understood as that the first configuration includes the CN eDRX configuration. The second duration may be agreed upon by a protocol, indicated by a network-side device, preconfigured by the terminal, or the like. For example, the second duration may be equal to or greater than 10.24 seconds. A specific value of the second duration is not limited in this embodiment.

That the terminal is not expected to perform the target positioning behavior beyond the CN PTW may be referred to as that the terminal does not expect to perform the target positioning behavior beyond the CN PTW, or may be referred to as that the terminal is not requested to perform the target positioning behavior beyond the CN PTW, or may be referred to as that the terminal is not to perform the target positioning behavior beyond the CN PTW, and so on.

In some optional embodiments, in a case that the terminal is in an idle state, if the terminal is configured with CN eDRX and a cycle of the CN eDRX is greater than second duration, the terminal may perform the target positioning behavior within a CN PTW.

In this embodiment, in a case that the terminal is in an idle state, if the terminal is configured with the CN eDRX and the cycle of the CN eDRX is greater than the second duration, the terminal is not expected to perform the target positioning behavior beyond the CN PTW. In this way, a quantity of times that the terminal performs the target positioning behavior in an idle state can be reduced, and therefore, power consumption of terminal positioning can be reduced.

Optionally, that the terminal determines, according to the first configuration, whether to perform the target positioning behavior includes at least one of the following:
in a case that the terminal is in an inactive state, if the terminal is configured with CN eDRX, a cycle of the CN eDRX is greater than third duration, and the terminal is not configured with RAN eDRX, the terminal is not expected to perform the target positioning behavior beyond a CN PTW;
in a case that the terminal is in an inactive state, if the terminal is configured with CN eDRX, a cycle of the CN eDRX is greater than third duration, the terminal is configured with RAN eDRX, and a cycle of the RAN eDRX is less than or equal to fourth duration, the terminal is not expected to perform the target positioning behavior beyond a CN PTW; and
in a case that the terminal is in an inactive state, if the terminal is configured with CN eDRX, a cycle of the CN eDRX is greater than third duration, the terminal is configured with RAN eDRX, and a cycle of the RAN eDRX is greater than fourth duration, the terminal is not expected to perform the target positioning behavior beyond a first time window, where the first time window includes one of the following: a CN PTW, a RAN PTW, the CN PTW and the RAN PTW (a union set of the CN PTW and the RAN PTW), and an overlapping time window between the CN PTW and the RAN PTW.

The third duration may be agreed upon by a protocol, indicated by a network-side device, preconfigured by the terminal, or the like. For example, the third duration may be equal to or greater than 10.24 seconds. A specific value of the third duration is not limited in this embodiment. The fourth duration may be agreed upon by a protocol, indicated by a network-side device, preconfigured by the terminal, or the like. For example, the fourth duration may be equal to or greater than 10.24 seconds. A specific value of the fourth duration is not limited in this embodiment.

In a case that the first time window is the CN PTW and the RAN PTW, that the terminal is not expected to perform the target positioning behavior beyond the first time window may mean that the terminal is not expected to perform the target positioning behavior beyond the CN PTW and beyond the RAN PTW.

In some optional embodiments, in a case that the terminal is not expected to perform the target positioning behavior beyond the CN PTW, the terminal may perform the target positioning behavior within the CN PTW.

In some optional embodiments, in a case that the terminal is not expected to perform the target positioning behavior beyond the first time window, the terminal may perform the target positioning behavior within the first time window.

Optionally, in a case that the terminal is in an idle state or an inactive state, if the terminal is configured with a time window related to the target positioning behavior, a cycle for performing the target positioning behavior by the terminal includes at least one of: a cycle for performing the target positioning behavior by the terminal in the time window and a cycle for performing the target positioning behavior by the terminal beyond the time window.

At least one of the cycle for performing the target positioning behavior by the terminal within the time window and the cycle for performing the target positioning behavior by the terminal beyond the time window may be configured or preconfigured by a network-side device.

In some optional embodiments, at least one of the cycle for performing the target positioning behavior by the terminal within the time window and the cycle for performing the target positioning behavior by the terminal beyond the time window may be included in a configuration of the time window, or at least one of the cycle for performing the target positioning behavior by the terminal within the time window and the cycle for performing the target positioning behavior by the terminal beyond the time window may be not included in the configuration of the time window, but is respectively associated with corresponding cycles for the target positioning behavior within and beyond the time window.

Optionally, a cycle for performing the target positioning behavior by the terminal is related to a target cycle.

The target cycle may be agreed upon by a protocol, or may be configured by the network-side device, or may be determined by the terminal. For example, the terminal may determine the target cycle according to the first configuration.

For example, the target cycle may be determined according to at least one of the DRX cycle and the eDRX cycle of the terminal. For example, the target cycle may be determined according to the CN DRX cycle and the default DRX cycle; or the target cycle may be determined according to the CN DRX cycle, the RAN DRX cycle, and the default DRX cycle; or the target cycle may be determined according to the cycle of the CN eDRX and the RAN DRX cycle; or the target cycle may be determined according to the CN DRX cycle and the cycle of the RAN eDRX; or the target cycle may be determined according to the CN DRX cycle, the cycle of the RAN eDRX, and the default DRX cycle; or the target cycle may be determined according to the CN DRX cycle, the cycle of the RAN eDRX, and the default DRX cycle.

In some optional embodiments, different target positioning behaviors may be configured with or corresponding to different target cycles. For example, for the downlink positioning reference signal measurement, a target cycle corresponding thereto may be a first target cycle, and for the uplink positioning reference signal sending, a target cycle corresponding thereto may be a second target cycle.

In some optional embodiments, for a same target positioning behavior, a plurality of different target cycles may be configured. For example, a plurality of different target cycles for different application scenarios are configured, or a plurality of different target cycles for different time are configured. For example, in a case that the terminal is in an inactive state, if the UE is configured with the CN PTW, a target cycle used within the CN PTW and a target cycle used beyond the CN PTW may be configured; and if the UE is configured with the CN PTW and the RAN PTW, different target cycles may be respectively configured for the following cases, where the case includes at least one of the following:
Case 1: Within the CN PTW and beyond the RAN PTW;
Case 2: Within the RAN PTW and beyond the CN PTW;
Case 3: Overlapping PTW between the RAN PTW and the CN PTW; and
Case 4: Beyond the RAN PTW and beyond the CN PTW.

For another example, in a case that the terminal is in an idle state, if the UE is configured with the CN PTW, a target cycle used within the CN PTW and a target cycle used beyond the CN PTW may be configured.

Optionally, beyond the PTW (beyond the CN PTW, beyond the RAN PTW, or beyond the CN PTW and the RAN PTW), the UE is indicated not to, or it is agreed upon by a protocol not to, or the UE chooses not to perform the target positioning behavior, and a target cycle may not be configured by the network beyond the PTW.

It should be noted that the foregoing related description of the PTW is also applicable to the time window related to the target positioning behavior. To avoid repetition, details are not described herein again.

Optionally, the cycle for performing the target positioning behavior by the terminal includes at least one of the following: the target cycle and a second cycle calculated according to the target cycle.

In some optional embodiments, for different target positioning behaviors, relationships between performing cycles corresponding thereto and target cycles may be different. For example, for a target positioning behavior 1 (for example, the downlink positioning reference signal measurement), a performing cycle corresponding thereto (that is, a cycle for performing the downlink positioning reference signal measurement) may be the target cycle, and for a target positioning behavior 2 (for example, the uplink positioning reference signal sending), a performing cycle corresponding thereto (that is, a cycle for performing the uplink positioning reference signal sending) may be the second cycle calculated according to the target cycle. In some optional embodiments, for different target positioning behaviors, performing cycles corresponding thereto may be obtained through calculation in different calculation manners based on the target cycle.

In some optional embodiments, in a process in which the terminal performs at least one of the foregoing target positioning behavior, a value of a target cycle associated with performing of the target positioning behavior is fixed. Further, in a process in which the terminal performs at least one of the foregoing target positioning behavior, a cycle for performing the target positioning behavior is fixed.

Optionally, the second cycle includes at least one of the following:
a third cycle, where the third cycle is a least common multiple between the target cycle and a configured cycle of a downlink positioning reference signal, and the third cycle is a cycle for performing the downlink positioning reference signal measurement;
a fourth cycle, where the fourth cycle is a least common multiple between the target cycle and a configured cycle of an uplink positioning reference signal, and the fourth cycle is a cycle for performing the uplink positioning reference signal sending; and
a fifth cycle, where the fifth cycle is a least common multiple between the target cycle and a configured positioning measurement result reporting cycle, and the fifth cycle is a cycle for performing the positioning measurement result reporting.

In this embodiment, the terminal may perform the downlink positioning reference signal measurement based on the third cycle. For example, the terminal may perform the downlink positioning reference signal measurement once in each third cycle. The terminal may perform the uplink positioning reference signal sending based on the fourth cycle. For example, the terminal may perform the uplink positioning reference signal sending once in each fourth cycle. The terminal may perform the positioning measurement result reporting based on the fifth cycle. For example, the terminal may perform the positioning measurement result reporting once in each fifth cycle.

In some optional embodiments, if a cycle of an uplink positioning reference signal (for example, an SRS) is related to the DRX cycle, if the DRX cycle changes due to the PTW, the cycle of the uplink positioning reference signal may be configured in the following configuration manners:
Manner 1: A plurality of cycles of the uplink positioning reference signal are configured, and are respectively applied to different scenarios.
Manner 2: One cycle of the uplink positioning reference signal is configured, and the cycle of the uplink positioning reference signal is adjusted according to an actual DRX change (for example, DRX cycles within and beyond the PTW are different, and a cycle for actually sending the uplink positioning reference signal (for example, the second cycle calculated according to the target cycle) is determined according to the DRX cycle.
Manner 3: One cycle of the uplink positioning reference signal is configured, where the cycle of the uplink positioning reference signal is not affected by a DRX or DRX cycle change.

It should be noted that the configured plurality of or one cycle of the uplink positioning reference signal is the foregoing configured cycle of the uplink positioning reference signal.

Optionally, the target cycle is a target DRX cycle.

Optionally, in a case that the terminal is in an idle state and the terminal is not configured with eDRX, the target cycle is configured by a network-side device, or the target cycle is determined according to one of the following:
a smaller value in the CN DRX cycle (that is, the CN DRX cycle) and the default DRX cycle (that is, the default DRX cycle);
a larger value in the CN DRX cycle and the default DRX cycle; and
a first DRX cycle, where the first DRX cycle is one indicated by the network-side device in the CN DRX cycle and the default DRX cycle, or the first DRX cycle is one selected by the terminal in the CN DRX cycle and the default DRX cycle, or the first DRX cycle is one agreed upon by a protocol in the CN DRX cycle and the default DRX cycle.

For the first DRX cycle, for example, if the network-side device indicates the CN DRX cycle in the CN DRX cycle and the default DRX cycle, the first DRX cycle is the CN DRX cycle; or if the network-side device indicates the default DRX cycle in the CN DRX cycle and the default DRX cycle, the first DRX cycle is the default DRX cycle; or if the terminal selects the CN DRX cycle in the CN DRX cycle and the default DRX cycle, the first DRX cycle is the CN DRX cycle; or if the terminal selects the default DRX cycle in the CN DRX cycle and the default DRX cycle, the first DRX cycle is the default DRX cycle; if the CN DRX cycle in the CN DRX cycle and the default DRX cycle is agreed upon by the protocol, the first DRX cycle is the CN DRX cycle; or if the default DRX cycle in the CN DRX cycle and the default DRX cycle is agreed upon by the protocol, the first DRX cycle is the default DRX cycle.

In some optional embodiments, in a case that the target cycle is configured by the network-side device, for a same target positioning behavior, the network-side device may configure a plurality of different target cycles. For example, the network-side device may configure a plurality of different target cycles used for different application scenarios, or configure a plurality of different target cycles used for different time (for example, within the CN PTW and beyond the CN PTW).

Optionally, in a case that the terminal is in an idle state and the terminal is configured with CN eDRX, if a cycle of the CN eDRX is less than or equal to fifth duration, the target cycle is the cycle of the CN eDRX.

The fifth duration may be agreed upon by a protocol, indicated by a network-side device, preconfigured by the terminal, or the like. For example, the fifth duration may be equal to or greater than 10.24 seconds. A specific value of the fifth duration is not limited in this embodiment.

Optionally, in a case that the terminal is in an idle state and the terminal is configured with CN eDRX, if a cycle of the CN eDRX is greater than fifth duration, the target cycle includes at least one of a first sub-target cycle and a second sub-target cycle, the first sub-target cycle is related to a cycle for performing the target positioning behavior by the terminal within a PTW, and the second sub-target cycle is related to a cycle for performing the target positioning behavior by the terminal beyond the PTW;
where the first sub-target cycle is configured by a network-side device, or the first sub-target cycle is determined according to one of the following:
a smaller value in a CN DRX cycle and a default DRX cycle;
a larger value in the CN DRX cycle and the default DRX cycle; and
a second DRX cycle, where the second DRX cycle is one indicated by the network-side device in the CN DRX cycle and the default DRX cycle, or the second DRX cycle is one selected by the terminal in the CN DRX cycle and the default DRX cycle, or the second DRX cycle is one agreed upon by a protocol in the CN DRX cycle and the default DRX cycle; and
the second sub-target cycle is configured by the network-side device, or the second sub-target cycle is determined according to one of the following:
   the first sub-target cycle;
   the smaller value in the CN DRX cycle and the default DRX cycle;
   the larger value in the CN DRX cycle and the default DRX cycle; and
   a third DRX cycle, where the third DRX cycle is one indicated by the network-side device in the CN DRX cycle and the default DRX cycle, or the third DRX cycle is one selected by the terminal in the CN DRX cycle and the default DRX cycle, or the third DRX cycle is one agreed upon by a protocol in the CN DRX cycle and the default DRX cycle.

That the first sub-target cycle is related to the cycle for performing the target positioning behavior by the terminal within the PTW may include that the cycle for performing the target positioning behavior by the terminal within the PTW may be the first sub-target cycle or determined according to the first sub-target cycle. That the second sub-target cycle is related to the cycle for performing the target positioning behavior by the terminal beyond the PTW may include that the cycle for performing the target positioning behavior by the terminal beyond the PTW may be the second sub-target cycle or determined according to the second sub-target cycle.

The second sub-target cycle is determined according to the first sub-target cycle. For example, the second sub-target cycle may be the same as the second sub-target cycle.

In some optional embodiments, in a case that the terminal does not perform the target positioning behavior beyond the PTW, the target cycle may include only the first sub-target cycle.

It should be noted that for the second DRX cycle and the third DRX cycle, references may be made to related descriptions of the first DRX cycle, and details are not described herein again.

Optionally, in a case that the terminal is in an inactive state and the terminal is not configured with CN eDRX and RAN eDRX, the target cycle is configured by a network-side device or the target cycle is determined according to one of the following:
a minimum value in a CN DRX cycle, a RAN DRX cycle (that is, a RAN DRX cycle), and a default DRX cycle;
a maximum value in the CN DRX cycle, the RAN DRX cycle, and the default DRX cycle; and
a fourth DRX cycle, where the fourth DRX cycle is one indicated by the network-side device in the CN DRX cycle, the RAN DRX cycle, and the default DRX cycle, or the fourth DRX cycle is one selected by the terminal in the CN DRX cycle, the RAN DRX cycle, and the default DRX cycle, or the fourth DRX cycle is one agreed upon by a protocol in the CN DRX cycle, the RAN DRX cycle, and the default DRX cycle.

For the fourth DRX cycle, for example, if the network-side device indicates the CN DRX cycle in the CN DRX cycle, the RAN DRX cycle, and the default DRX cycle, the first DRX cycle is the CN DRX cycle; or if the network-side device indicates the default DRX cycle in the CN DRX cycle, the RAN DRX cycle, and the default DRX cycle, the first DRX cycle is the default DRX cycle; or if the network-side device indicates the RAN DRX cycle in the CN DRX cycle, the RAN DRX cycle, and the default DRX cycle, the first DRX cycle is the RAN DRX cycle. Determining the fourth DRX cycle in a manner of being selected by the terminal or agreed upon by a protocol is similar to being indicated by the network-side device, and details are not described herein.

Optionally, in a case that the terminal is in an inactive state, and the terminal is configured with CN eDRX and is not configured with RAN eDRX, if a cycle of the CN eDRX is less than or equal to sixth duration, the target cycle is configured by a network-side device or the target cycle is determined according to one of the following:
a smaller value in the cycle of the CN eDRX and a RAN DRX cycle;
a larger value in the cycle of the CN eDRX and the RAN DRX cycle; and
a fifth DRX cycle, where the fifth DRX cycle is one indicated by the network-side device in the cycle of the CN eDRX and the RAN DRX cycle, or the fifth DRX cycle is one selected by the terminal in the cycle of the CN eDRX and the RAN DRX cycle, or the fifth DRX cycle is one agreed upon by a protocol in the cycle of the CN eDRX and the RAN DRX cycle.

The sixth duration may be agreed upon by a protocol, indicated by a network-side device, preconfigured by the terminal, or the like. For example, the sixth duration may be equal to or greater than 10.24 seconds. A specific value of the sixth duration is not limited in this embodiment.

Optionally, in a case that the terminal is in a deactivated state, and the terminal is configured with CN eDRX and is not configured with RAN eDRX, if the cycle of the CN eDRX is greater than sixth duration, the target cycle includes at least one of a third sub-target cycle and a fourth sub-target cycle, the third sub-target cycle is related to a cycle for performing the target positioning behavior by the terminal within a CN PTW, and the fourth sub-target cycle is related to a cycle for performing the target positioning behavior by the terminal beyond the CN PTW;
where the third sub-target cycle is configured by a network-side device, or the third sub-target cycle is determined according to one of the following:
a minimum value in a CN DRX cycle, a RAN DRX cycle, and a default DRX cycle;
a maximum value in the CN DRX cycle, the RAN DRX cycle, and the default DRX cycle; and
a sixth DRX cycle, where the sixth DRX cycle is one indicated by the network-side device in the CN DRX cycle, the RAN DRX cycle, and the default DRX cycle, or the sixth DRX cycle is one selected by the terminal in the CN DRX cycle, the RAN DRX cycle, and the default DRX cycle, or the sixth DRX cycle is one agreed upon by a protocol in the CN DRX cycle, the RAN DRX cycle, and the default DRX cycle; and
the fourth sub-target cycle is the RAN DRX cycle, or the fourth sub-target cycle is configured by the network-side device, or the fourth sub-target cycle is determined according to one of the following:
   the third sub-target cycle;
   the maximum value in the CN DRX cycle, the RAN DRX cycle, and the default DRX cycle; and
   a seventh DRX cycle, where the seventh DRX cycle is one indicated by the network-side device in the CN DRX cycle, the RAN DRX cycle, and the default DRX cycle, or the seventh DRX cycle is one selected by the terminal in the CN DRX cycle, the RAN DRX cycle, and the default DRX cycle, or the seventh DRX cycle is one agreed upon by a protocol in the CN DRX cycle, the RAN DRX cycle, and the default DRX cycle.

The sixth duration may be agreed upon by a protocol, indicated by a network-side device, preconfigured by the terminal, or the like. For example, the sixth duration may be equal to or greater than 10.24 seconds. A specific value of the sixth duration is not limited in this embodiment.

That the third sub-target cycle is related to the cycle for performing the target positioning behavior by the terminal within the CN PTW may include that the cycle for performing the target positioning behavior by the terminal within the CN PTW may be the third sub-target cycle or determined according to the third sub-target cycle. That the fourth sub-target cycle is related to the cycle for performing the target positioning behavior by the terminal beyond the CN PTW may include that the cycle for performing the target positioning behavior by the terminal beyond the CN PTW may be the fourth sub-target cycle or determined according to the fourth sub-target cycle.

The fourth sub-target cycle is determined according to the third sub-target cycle. For example, the fourth sub-target cycle may be the same as the third sub-target cycle.

In some optional embodiments, in a case that the terminal does not perform the target positioning behavior beyond the CN PTW, the target cycle may include only the third sub-target cycle.

Optionally, in a case that the terminal is in an inactive state, and the terminal is configured with CN eDRX and is configured with RAN eDRX, if a cycle of the CN eDRX is less than or equal to seventh duration and a cycle of the RAN eDRX is less than or equal to eighth duration, the target cycle is configured by a network-side device or the target cycle is determined according to one of the following:
a smaller value in the cycle of the CN eDRX and the cycle of the RAN eDRX;
a larger value in the cycle of the CN eDRX and the cycle of the RAN eDRX; and
an eighth DRX cycle, where the eighth DRX cycle is one indicated by the network-side device in the cycle of the CN eDRX and the cycle of the RAN eDRX, or the eighth DRX cycle is one selected by the terminal in the cycle of the CN eDRX and the cycle of the RAN eDRX, or the eighth DRX cycle is one agreed upon by a protocol in the cycle of the CN eDRX and the cycle of the RAN eDRX.

The seventh duration may be agreed upon by a protocol, indicated by a network-side device, preconfigured by the terminal, or the like. For example, the seventh duration may be equal to or greater than 10.24 seconds. A specific value of the seventh duration is not limited in this embodiment.

The eighth duration may be agreed upon by a protocol, indicated by a network-side device, preconfigured by the terminal, or the like. For example, the eighth duration may be equal to or greater than 10.24 seconds. A specific value of the eighth duration is not limited in this embodiment.

Optionally, in a case that the terminal is in an inactive state, and the terminal is configured with CN eDRX and is configured with RAN eDRX, if a cycle of the CN eDRX is greater than seventh duration and a cycle of the RAN eDRX is less than or equal to eighth duration, the target cycle includes at least one of a fifth sub-target cycle and a sixth sub-target cycle, the fifth sub-target cycle is related to a cycle for performing the target positioning behavior by the terminal within a CN PTW, and the sixth sub-target cycle is related to a cycle for performing the target positioning behavior by the terminal beyond the CN PTW;
where the fifth sub-target cycle is configured by a network-side device, or the fifth sub-target cycle is determined according to one of the following:
a minimum value in the CN DRX cycle, the cycle of the RAN eDRX, and a default DRX cycle;
a maximum value in the CN DRX cycle, the cycle of the RAN eDRX, and the default DRX cycle; and
a ninth DRX cycle, where the ninth DRX cycle is one indicated by the network-side device in the CN DRX cycle, the cycle of the RAN eDRX, and the default DRX cycle, or the ninth DRX cycle is one selected by the terminal in the CN DRX cycle, the cycle of the RAN eDRX, and the default DRX cycle, or the ninth DRX cycle is one agreed upon by a protocol in the CN DRX cycle, the cycle of the RAN eDRX, and the default DRX cycle; and
the sixth sub-target cycle is the cycle of the RAN eDRX, or the sixth sub-target cycle is configured by the network-side device, or the sixth sub-target cycle is determined according to one of the following:
   the fifth sub-target cycle;
   the maximum value in the CN DRX cycle, the cycle of the RAN eDRX, and the default DRX cycle; and
   a tenth DRX cycle, where the tenth DRX cycle is one indicated by the network-side device in the CN DRX cycle, the cycle of the RAN eDRX, and the default DRX cycle, or the tenth DRX cycle is one selected by the terminal in the CN DRX cycle, the cycle of the RAN eDRX, and the default DRX cycle, or the tenth DRX cycle is one agreed upon by a protocol in the CN DRX cycle, the cycle of the RAN eDRX, and the default DRX cycle.

The seventh duration may be agreed upon by a protocol, indicated by a network-side device, preconfigured by the terminal, or the like. For example, the seventh duration may be equal to or greater than 10.24 seconds. A specific value of the seventh duration is not limited in this embodiment.

The eighth duration may be agreed upon by a protocol, indicated by a network-side device, preconfigured by the terminal, or the like. For example, the eighth duration may be equal to or greater than 10.24 seconds. A specific value of the eighth duration is not limited in this embodiment.

That the fifth sub-target cycle is related to the cycle for performing the target positioning behavior by the terminal within the CN PTW may include that the cycle for performing the target positioning behavior by the terminal within the CN PTW may be the fifth sub-target cycle or may be determined according to the fifth sub-target cycle. That the sixth sub-target cycle is related to the cycle for performing the target positioning behavior by the terminal beyond the CN PTW may include that the cycle for performing the target positioning behavior by the terminal beyond the CN PTW may be the sixth sub-target cycle or may be determined according to the sixth sub-target cycle.

The sixth sub-target cycle is determined according to the fifth sub-target cycle. For example, the sixth sub-target cycle may be the same as the fifth sub-target cycle.

In some optional embodiments, in a case that the terminal does not perform the target positioning behavior beyond the CN PTW, the target cycle may include only the fifth sub-target cycle.

Optionally, in a case that the terminal is in an inactive state, and the terminal is configured with CN eDRX and is configured with RAN eDRX, if a cycle of the CN eDRX is greater than seventh duration and the cycle of the RAN eDRX is greater than eighth duration, the target cycle includes at least one of a seventh sub-target cycle, an eighth sub-target cycle, a ninth sub-target cycle, and a tenth sub-target cycle;
the seventh sub-target cycle is related to a cycle for performing the target positioning behavior by the terminal within a second time window, the eighth sub-target cycle is related to a cycle for performing the target positioning behavior by the terminal within a third time window, the ninth sub-target cycle is related to a cycle for performing the target positioning behavior by the terminal within a fourth time window, the tenth sub-target cycle is related to a cycle for performing the target positioning behavior by the terminal beyond a fifth time window, the second time window is located within a CN PTW and located beyond a RAN PTW, the third time window is located beyond the CN PTW and located within the RAN PTW, the fourth time window is an overlapping time window between the CN PTW and the RAN PTW, and the fifth time window includes the CN PTW and the RAN PTW (that is, a union set of the CN PTW and the RAN PTW);
where the seventh sub-target cycle is configured by a network-side device, or the seventh sub-target cycle is determined according to one of the following:
   at least one of the eighth sub-target cycle and the ninth sub-target cycle;
   a smaller value in a CN DRX cycle and a default DRX cycle;
   a larger value in the CN DRX cycle and the default DRX cycle; and
   an eleventh DRX cycle, where the eleventh DRX cycle is one indicated by the network-side device in the CN DRX cycle and the default DRX cycle, or the eleventh DRX cycle is one selected by the terminal in the CN DRX cycle and the default DRX cycle, or the eleventh DRX cycle is one agreed upon by a protocol in the CN DRX cycle and the default DRX cycle;
   the eighth sub-target cycle is configured by the network-side device, or the eighth sub-target cycle is determined according to one of the following:
      at least one of the seventh sub-target cycle and the ninth sub-target cycle;
      a smaller value in an RAN DRX cycle and the default DRX cycle;
      a larger value in the RAN DRX cycle and the default DRX cycle; and
      an eleventh DRX cycle, where the eleventh DRX cycle is one indicated by the network-side device in the RAN DRX cycle and the default DRX cycle, or the eleventh DRX cycle is one selected by the terminal in the RAN DRX cycle and the default DRX cycle, or the eleventh DRX cycle is one agreed upon by a protocol in the RAN DRX cycle and the default DRX cycle;
      the ninth sub-target cycle is configured by the network-side device, or the ninth sub-target cycle is determined according to one of the following:
         at least one of the seventh sub-target cycle and the eighth sub-target cycle;
         a minimum value in the CN DRX cycle, the RAN DRX cycle, and the default DRX cycle;
         a maximum value in the CN DRX cycle, the RAN DRX cycle, and the default DRX cycle; and
         a twelfth DRX cycle, where the twelfth DRX cycle is one indicated by the network-side device in the CN DRX cycle, the RAN DRX cycle, and the default DRX cycle, or the twelfth DRX cycle is one selected by the terminal in the CN DRX cycle, the RAN DRX cycle, and the default DRX cycle, or the twelfth DRX cycle is one agreed upon by a protocol in the CN DRX cycle, the RAN DRX cycle, and the default DRX cycle; and
         the tenth sub-target cycle is configured by the network-side device, or the tenth sub-target cycle is determined according to at least one of the seventh sub-target cycle, the eighth sub-target cycle, and the ninth sub-target cycle.

The cycle for performing the target positioning behavior by the terminal within the second time window is the cycle for performing the target positioning behavior by the terminal within the CN PTW and beyond the RAN PTW. The cycle for performing the target positioning behavior by the terminal within the third time window is the cycle for performing the target positioning behavior by the terminal beyond the CN PTW and within the RAN PTW. The cycle for performing the target positioning behavior by the terminal within the fourth time window is the cycle for performing the target positioning behavior by the terminal within the overlapping time window between the CN PTW and the RAN PTW. The cycle for performing the target positioning behavior by the terminal beyond the fifth time window is the cycle for performing the target positioning behavior by the terminal beyond the CN PTW and beyond the RAN PTW.

That the seventh sub-target cycle is related to the cycle for performing the target positioning behavior by the terminal within the second time window may include that the cycle for performing the target positioning behavior by the terminal within the second time window may be the seventh sub-target cycle or determined according to the seventh sub-target cycle. That the eighth sub-target cycle is related to the cycle for performing the target positioning behavior by the terminal within the third time window may include that the cycle for performing the target positioning behavior by the terminal within the third time window may be the eighth sub-target cycle or determined according to the eighth sub-target cycle. That the ninth sub-target cycle is related to the cycle for performing the target positioning behavior by the terminal within the fourth time window may include that the cycle for performing the target positioning behavior by the terminal within the fourth time window may be the ninth sub-target cycle or determined according to the ninth sub-target cycle. That the tenth sub-target cycle is related to the cycle for performing the target positioning behavior by the terminal beyond the fifth time window may include that the cycle for performing the target positioning behavior by the terminal beyond the fifth time window may be the tenth sub-target cycle or determined according to the tenth sub-target cycle.

In some optional embodiments, in a case that the terminal does not perform the target positioning behavior beyond the CN PTW, or does not perform the target positioning behavior beyond the RAN PTW, or does not perform the target positioning behavior beyond the RAN PTW and beyond the CN PTW, the target cycle includes only a sub-target cycle corresponding to performing of the target positioning behavior. Optionally, the time domain configuration of the positioning reference signal includes at least one of the following:
the cycle of the positioning reference signal;
a time domain offset of the positioning reference signal; and
time domain information of the positioning reference signal.

In this embodiment, the positioning reference signal may include at least one of a downlink positioning reference signal and an uplink positioning reference signal. The cycle of the positioning reference signal is greater than the first duration.

The time domain offset of the positioning reference signal may include but is not limited to at least one of a hyper frame offset, a system frame offset, a subframe offset, a slot offset, and the like.

The time domain information of the positioning reference signal may include at least one of a time domain location of the positioning reference signal, for example, a number of a hyper frame in which the positioning reference signal is located, a number of a system frame in which the positioning reference signal is located, and a number of a slot in which the positioning reference signal is located.

Optionally, the time domain offset of the positioning reference signal includes at least one of the following: an H-SFN offset (that is, an H-SFN offset) of the positioning reference signal; and a slot offset (that is, a slot offset) of the positioning reference signal; and
the time domain information of the positioning reference signal includes an H-SFN of a hyper frame in which a start positioning reference signal is located.

The H-SFN of the hyper frame in which the start positioning reference signal is located may be understood as a number of the hyper frame in which the start positioning reference signal occurs. In the hyper frame (that is, the hyper system frame number) or the paging hyper frame (that is, the hyper paging system frame number), a length of one hyper frame may be equal to lengths of 1024 system frames.

In some optional embodiments, only when the cycle of the positioning reference signal is greater than the first duration (for example, 10.24s), the time domain offset includes an H-SFN offset, or the time domain offset includes an H-SFN offset and the slot offset is an offset relative to a slot 0 of SFNO in a hyper frame, or the time domain information includes a hyper system frame number (H-SFN).

Optionally, the H-SFN offset of the positioning reference signal includes an H-SFN offset of the hyper frame in which the start positioning reference signal is located relative to H-SFNO; and
the slot offset of the positioning reference signal includes an offset of a number of a slot in which the start positioning reference signal is located relative to a slot 0 of SFNO of a target H-SFN, where the target H-SFN is a number of the hyper frame in which the start positioning reference signal is located.

For example, if the H-SFN of the hyper frame in which the start positioning reference signal is located is H-SFN2, the H-SFN offset is an offset value between H-SFN2 and H-SFNO.

Optionally, in a case that the cycle of the positioning reference signal is an integer multiple of a hyper frame length, the slot offset of the positioning reference signal is the same in a cycle of each positioning reference signal.

Optionally, the positioning reference signal includes a downlink positioning reference signal, and an H-SFN of the downlink positioning reference signal is an H-SFN of a network-side device that sends the downlink positioning reference signal.

The H-SFN of the downlink positioning reference signal is the H-SFN of the network-side device that sends the downlink positioning reference signal. For example, the H-SFN of the downlink positioning reference signal may be an H-SFN of a TRP, a base station, or a cell that sends the downlink positioning reference signal. It should be noted that, that the H-SFN of the downlink positioning reference signal is the H-SFN of the network-side device that sends the downlink positioning reference signal may be understood as that receiving of the downlink positioning reference signal is based on the H-SFN of the network-side device for timing.

In some optional embodiments, the SFN of the downlink positioning reference signal is an SFN of a network-side device that sends the downlink positioning reference signal.

Optionally, the positioning reference signal includes an uplink positioning reference signal, and an H-SFN of the uplink positioning reference signal is obtained by a network-side device.

For example, the H-SFN of the uplink positioning reference signal may be obtained based on a cell, a serving cell, a base station, a serving base station, or the like. It should be noted that, that the H-SFN of the uplink positioning reference signal is obtained according to the network-side device may be understood as that the H-SFN of the uplink positioning reference signal is determined based on timing of the network-side device.

In some optional embodiments, the SFN of the uplink positioning reference signal is obtained according to the network-side device.

Optionally, the time domain offset of the positioning reference signal includes an offset of a number of a slot in which the start positioning reference signal is located relative to a slot 0 of SFNO in H-SFNO.

Optionally, the time domain configuration of the positioning reference signal includes a time domain configuration of a positioning reference signal resource or a time domain configuration of a positioning reference signal resource set.

Specifically, in a case that the positioning reference signal includes an uplink positioning reference signal, a time domain configuration of the uplink positioning reference signal includes a time domain configuration of an uplink positioning reference signal resource (for example, an SRS resource (that is, an SRS resource)) or includes a time domain configuration of an uplink positioning reference signal resource set (for example, an SRS resource set (that is, an SRS resource set)). In a case that the positioning reference signal includes a downlink positioning reference signal, a time domain configuration of the downlink positioning reference signal includes a time domain configuration of a downlink positioning reference signal resource (for example, a downlink PRS resource (DL PRS resource)) or includes a time domain configuration of a downlink positioning reference signal resource set (for example, a downlink PRS resource set (DL PRS resource set)).

Optionally, the positioning reference signal includes a downlink positioning reference signal, and in a case that a cycle of the downlink positioning reference signal is greater than the first duration, the terminal is not expected to be configured with a cyclic muting pattern (that is, a muting pattern).

For example, the muting pattern may be an option-1 muting pattern (that is, an option-1 muting pattern).

Optionally, the target configuration includes the second configuration; and
that the terminal controls a target positioning behavior according to a target configuration includes at least one of the following:
the terminal performs the downlink positioning reference signal measurement according to a time domain configuration of a downlink positioning reference signal; and
the terminal performs the uplink positioning reference signal sending according to a time domain configuration of an uplink positioning reference signal.

In this embodiment, that the terminal performs the downlink positioning reference signal measurement according to the time domain configuration of the downlink positioning reference signal may include that the terminal receives the downlink positioning reference signal according to the time domain configuration of the downlink positioning reference signal.

Optionally, the target positioning behavior includes the positioning measurement result reporting, and a positioning measurement result reported by the terminal includes a timestamp (that is, a timestamp) of at least one positioning measurement;
where the time stamp of the positioning measurement includes at least one of the following:
a first H-SFN, where the first H-SFN is an H-SFN of a hyper frame in which the positioning measurement is located;
a first SFN, where the first SFN is an SFN of a system frame in which the positioning measurement is located, and the first SFN is located in the first H-SFN; and
a first slot index (that is, a slot index), where the first slot index is a number of a slot in which the positioning measurement is located, and the first slot index is located in the first SFN.

The hyper frame in which the positioning measurement is located may be understood as that the positioning measurement occurs in the hyper frame. The system frame in which the positioning measurement is located may be understood as that the positioning measurement occurs in the system frame. The slot in which the positioning measurement is located may be understood as that the positioning measurement occurs in the slot.

That the first SFN is located in the first H-SFN may be understood as that a system frame identified by the first SFN is located in a hyper frame identified by the first H-SFN. That the first slot index is located in the first SFN may be understood as that a slot identified by the first slot index is located in a system frame identified by the first SFN.

It should be noted that, in a case that the terminal performs positioning measurement, for a cycle of the positioning measurement, the cycle may be greater than the first duration, or may be less than or equal to the first duration.

Optionally, the method further includes:
The terminal reports first capability information, where the first capability information is used to indicate whether the terminal supports an H-SFN.

For example, the terminal may report the first capability indication information to the network-side device, so as to indicate whether the terminal supports the H-SFN, or indicate whether the terminal supports determining of the H-SFN.

It should be noted that the positioning processing method provided in the embodiment of this application may be performed by a positioning processing apparatus, or a control module that is in the positioning processing apparatus and that is configured to perform the positioning processing method. In the embodiments of this application, the positioning processing apparatus provided in the embodiments of this application is described by using an example in which the positioning processing apparatus performs the positioning processing method.

Referring to FIG. 4, FIG. 4 is a structural diagram of a positioning processing apparatus according to an embodiment of this application. As shown in FIG. 4, a positioning processing apparatus 400 includes:
a control module 401, configured to control a target positioning behavior according to a target configuration;
where the target configuration includes at least one of a first configuration and a second configuration, the first configuration includes at least one of a discontinuous reception DRX configuration of the terminal, an extended discontinuous reception eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

Optionally, the target configuration includes the first configuration; and
the control module is specifically configured to perform at least one of the following:
determining, according to the first configuration, whether to perform the target positioning behavior; and
determining, according to the first configuration, a first cycle for performing the target positioning behavior, and performing the target positioning behavior according to the first cycle.

Optionally, the target positioning behavior is performed once in each first cycle.

Optionally, the control module is specifically configured to:
in a case that the terminal is in an idle state or an inactive state, if the terminal is configured with a time window related to the target positioning behavior, the terminal is not expected to perform the target positioning behavior beyond the time window.

Optionally, the control module is specifically configured to:
in a case that the terminal is in an idle state, if the terminal is configured with core network CN eDRX, and a cycle of the CN eDRX is greater than second duration, the terminal is not expected to perform the target positioning behavior beyond a CN paging time window PTW.

Optionally, the control module is specifically configured to perform at least one of the following:
in a case that the terminal is in an inactive state, if the terminal is configured with CN eDRX, a cycle of the CN eDRX is greater than third duration, and the terminal is not configured with radio access network RAN eDRX, the terminal is not expected to perform the target positioning behavior beyond a CN PTW;
in a case that the terminal is in an inactive state, if the terminal is configured with CN eDRX, a cycle of the CN eDRX is greater than third duration, the terminal is configured with RAN eDRX, and a cycle of the RAN eDRX is less than or equal to fourth duration, the terminal is not expected to perform the target positioning behavior beyond a CN PTW; and
in a case that the terminal is in an inactive state, if the terminal is configured with CN eDRX, a cycle of the CN eDRX is greater than third duration, the terminal is configured with RAN eDRX, and a cycle of the RAN eDRX is greater than fourth duration, the terminal is not expected to perform the target positioning behavior beyond a first time window, where the first time window includes one of the following: a CN PTW, a RAN PTW, the CN PTW and the RAN PTW, and an overlapping time window between the CN PTW and the RAN PTW.

Optionally, in a case that the terminal is in an idle state or an inactive state, if the terminal is configured with a time window related to the target positioning behavior, a cycle for performing the target positioning behavior by the terminal includes at least one of: a cycle for performing the target positioning behavior by the terminal in the time window and a cycle for performing the target positioning behavior by the terminal beyond the time window.

Optionally, a cycle for performing the target positioning behavior by the terminal is related to a target cycle.

Optionally, the cycle for performing the target positioning behavior by the terminal includes at least one of the following: the target cycle and a second cycle calculated according to the target cycle.

Optionally, the second cycle includes at least one of the following:
a third cycle, where the third cycle is a least common multiple between the target cycle and a configured cycle of a downlink positioning reference signal, and the third cycle is a cycle for performing the downlink positioning reference signal measurement;
a fourth cycle, where the fourth cycle is a least common multiple between the target cycle and a configured cycle of an uplink positioning reference signal, and the fourth cycle is a cycle for performing the uplink positioning reference signal sending; and
a fifth cycle, where the fifth cycle is a least common multiple between the target cycle and a configured positioning measurement result reporting cycle, and the fifth cycle is a cycle for performing the positioning measurement result reporting.

Optionally, the target cycle is a target DRX cycle.

Optionally, in a case that the terminal is in an idle state and the terminal is not configured with eDRX, the target cycle is configured by a network-side device, or the target cycle is determined according to one of the following:
a smaller value in a CN DRX cycle and a default DRX cycle;
a larger value in the CN DRX cycle and the default DRX cycle; and
a first DRX cycle, where the first DRX cycle is one indicated by the network-side device in the CN DRX cycle and the default DRX cycle, or the first DRX cycle is one selected by the terminal in the CN DRX cycle and the default DRX cycle, or the first DRX cycle is one agreed upon by a protocol in the CN DRX cycle and the default DRX cycle.

Optionally, in a case that the terminal is in an idle state and the terminal is configured with CN eDRX, if a cycle of the CN eDRX is less than or equal to fifth duration, the target cycle is the cycle of the CN eDRX.

Optionally, in a case that the terminal is in an idle state and the terminal is configured with CN eDRX, if a cycle of the CN eDRX is greater than fifth duration, the target cycle includes at least one of a first sub-target cycle and a second sub-target cycle, the first sub-target cycle is related to a cycle for performing the target positioning behavior by the terminal within a PTW, and the second sub-target cycle is related to a cycle for performing the target positioning behavior by the terminal beyond the PTW;
where the first sub-target cycle is configured by a network-side device, or the first sub-target cycle is determined according to one of the following:
a smaller value in a CN DRX cycle and a default DRX cycle;
a larger value in the CN DRX cycle and the default DRX cycle; and
a second DRX cycle, where the second DRX cycle is one indicated by the network-side device in the CN DRX cycle and the default DRX cycle, or the second DRX cycle is one selected by the terminal in the CN DRX cycle and the default DRX cycle, or the second DRX cycle is one agreed upon by a protocol in the CN DRX cycle and the default DRX cycle; and
the second sub-target cycle is configured by the network-side device, or the second sub-target cycle is determined according to one of the following:
   the first sub-target cycle;
   the smaller value in the CN DRX cycle and the default DRX cycle;
   the larger value in the CN DRX cycle and the default DRX cycle; and
   a third DRX cycle, where the third DRX cycle is one indicated by the network-side device in the CN DRX cycle and the default DRX cycle, or the third DRX cycle is one selected by the terminal in the CN DRX cycle and the default DRX cycle, or the third DRX cycle is one agreed upon by a protocol in the CN DRX cycle and the default DRX cycle.

Optionally, in a case that the terminal is in an inactive state and the terminal is not configured with CN eDRX and RAN eDRX, the target cycle is configured by a network-side device or the target cycle is determined according to one of the following:
a minimum value in a CN DRX cycle, a RAN DRX cycle, and a default DRX cycle;
a maximum value in the CN DRX cycle, the RAN DRX cycle, and the default DRX cycle; and
a fourth DRX cycle, where the fourth DRX cycle is one indicated by the network-side device in the CN DRX cycle, the RAN DRX cycle, and the default DRX cycle, or the fourth DRX cycle is one selected by the terminal in the CN DRX cycle, the RAN DRX cycle, and the default DRX cycle, or the fourth DRX cycle is one agreed upon by a protocol in the CN DRX cycle, the RAN DRX cycle, and the default DRX cycle.

Optionally, in a case that the terminal is in an inactive state, and the terminal is configured with CN eDRX and is not configured with RAN eDRX, if a cycle of the CN eDRX is less than or equal to sixth duration, the target cycle is configured by a network-side device or the target cycle is determined according to one of the following:
a smaller value in the cycle of the CN eDRX and a RAN DRX cycle;
a larger value in the cycle of the CN eDRX and the RAN DRX cycle; and
a fifth DRX cycle, where the fifth DRX cycle is one indicated by the network-side device in the cycle of the CN eDRX and the RAN DRX cycle, or the fifth DRX cycle is one selected by the terminal in the cycle of the CN eDRX and the RAN DRX cycle, or the fifth DRX cycle is one agreed upon by a protocol in the cycle of the CN eDRX and the RAN DRX cycle.

Optionally, in a case that the terminal is in a deactivated state, and the terminal is configured with CN eDRX and is not configured with RAN eDRX, if the cycle of the CN eDRX is greater than sixth duration, the target cycle includes at least one of a third sub-target cycle and a fourth sub-target cycle, the third sub-target cycle is related to a cycle for performing the target positioning behavior by the terminal within a CN PTW, and the fourth sub-target cycle is related to a cycle for performing the target positioning behavior by the terminal beyond the CN PTW;
where the third sub-target cycle is configured by a network-side device, or the third sub-target cycle is determined according to one of the following:
a minimum value in a CN DRX cycle, a RAN DRX cycle, and a default DRX cycle;
a maximum value in the CN DRX cycle, the RAN DRX cycle, and the default DRX cycle; and
a sixth DRX cycle, where the sixth DRX cycle is one indicated by the network-side device in the CN DRX cycle, the RAN DRX cycle, and the default DRX cycle, or the sixth DRX cycle is one selected by the terminal in the CN DRX cycle, the RAN DRX cycle, and the default DRX cycle, or the sixth DRX cycle is one agreed upon by a protocol in the CN DRX cycle, the RAN DRX cycle, and the default DRX cycle; and
the fourth sub-target cycle is the RAN DRX cycle, or the fourth sub-target cycle is configured by the network-side device, or the fourth sub-target cycle is determined according to one of the following:
   the third sub-target cycle;
   the maximum value in the CN DRX cycle, the RAN DRX cycle, and the default DRX cycle; and
   a seventh DRX cycle, where the seventh DRX cycle is one indicated by the network-side device in the CN DRX cycle, the RAN DRX cycle, and the default DRX cycle, or the seventh DRX cycle is one selected by the terminal in the CN DRX cycle, the RAN DRX cycle, and the default DRX cycle, or the seventh DRX cycle is one agreed upon by a protocol in the CN DRX cycle, the RAN DRX cycle, and the default DRX cycle.

Optionally, in a case that the terminal is in an inactive state, and the terminal is configured with CN eDRX and is configured with RAN eDRX, if a cycle of the CN eDRX is less than or equal to seventh duration and a cycle of the RAN eDRX is less than or equal to eighth duration, the target cycle is configured by a network-side device or the target cycle is determined according to one of the following:
a smaller value in the cycle of the CN eDRX and the cycle of the RAN eDRX;
a larger value in the cycle of the CN eDRX and the cycle of the RAN eDRX; and
an eighth DRX cycle, where the eighth DRX cycle is one indicated by the network-side device in the cycle of the CN eDRX and the cycle of the RAN eDRX, or the eighth DRX cycle is one selected by the terminal in the cycle of the CN eDRX and the cycle of the RAN eDRX, or the eighth DRX cycle is one agreed upon by a protocol in the cycle of the CN eDRX and the cycle of the RAN eDRX.

Optionally, in a case that the terminal is in an inactive state, and the terminal is configured with CN eDRX and is configured with RAN eDRX, if a cycle of the CN eDRX is greater than seventh duration and a cycle of the RAN eDRX is less than or equal to eighth duration, the target cycle includes at least one of a fifth sub-target cycle and a sixth sub-target cycle, the fifth sub-target cycle is related to a cycle for performing the target positioning behavior by the terminal within a CN PTW, and the sixth sub-target cycle is related to a cycle for performing the target positioning behavior by the terminal beyond the CN PTW;
where the fifth sub-target cycle is configured by a network-side device, or the fifth sub-target cycle is determined according to one of the following:
a minimum value in the CN DRX cycle, the cycle of the RAN eDRX, and a default DRX cycle;
a maximum value in the CN DRX cycle, the cycle of the RAN eDRX, and the default DRX cycle; and
a ninth DRX cycle, where the ninth DRX cycle is one indicated by the network-side device in the CN DRX cycle, the cycle of the RAN eDRX, and the default DRX cycle, or the ninth DRX cycle is one selected by the terminal in the CN DRX cycle, the cycle of the RAN eDRX, and the default DRX cycle, or the ninth DRX cycle is one agreed upon by a protocol in the CN DRX cycle, the cycle of the RAN eDRX, and the default DRX cycle; and
the sixth sub-target cycle is the cycle of the RAN eDRX, or the sixth sub-target cycle is configured by the network-side device, or the sixth sub-target cycle is determined according to one of the following:
   the fifth sub-target cycle;
   the maximum value in the CN DRX cycle, the cycle of the RAN eDRX, and the default DRX cycle; and
   a tenth DRX cycle, where the tenth DRX cycle is one indicated by the network-side device in the CN DRX cycle, the cycle of the RAN eDRX, and the default DRX cycle, or the tenth DRX cycle is one selected by the terminal in the CN DRX cycle, the cycle of the RAN eDRX, and the default DRX cycle, or the tenth DRX cycle is one agreed upon by a protocol in the CN DRX cycle, the cycle of the RAN eDRX, and the default DRX cycle.

Optionally, in a case that the terminal is in an inactive state, and the terminal is configured with CN eDRX and is configured with RAN eDRX, if a cycle of the CN eDRX is greater than seventh duration and the cycle of the RAN eDRX is greater than eighth duration, the target cycle includes at least one of a seventh sub-target cycle, an eighth sub-target cycle, a ninth sub-target cycle, and a tenth sub-target cycle;
the seventh sub-target cycle is related to a cycle for performing the target positioning behavior by the terminal within a second time window, the eighth sub-target cycle is related to a cycle for performing the target positioning behavior by the terminal within a third time window, the ninth sub-target cycle is related to a cycle for performing the target positioning behavior by the terminal within a fourth time window, the tenth sub-target cycle is related to a cycle for performing the target positioning behavior by the terminal beyond a fifth time window, the second time window is located within a CN PTW and located beyond a RAN PTW, the third time window is located beyond the CN PTW and located within the RAN PTW, the fourth time window is an overlapping time window between the CN PTW and the RAN PTW, and the fifth time window includes the CN PTW and the RAN PTW;
where the seventh sub-target cycle is configured by a network-side device, or the seventh sub-target cycle is determined according to one of the following:
   at least one of the eighth sub-target cycle and the ninth sub-target cycle;
   a smaller value in a CN DRX cycle and a default DRX cycle;
   a larger value in the CN DRX cycle and the default DRX cycle; and
   an eleventh DRX cycle, where the eleventh DRX cycle is one indicated by the network-side device in the CN DRX cycle and the default DRX cycle, or the eleventh DRX cycle is one selected by the terminal in the CN DRX cycle and the default DRX cycle, or the eleventh DRX cycle is one agreed upon by a protocol in the CN DRX cycle and the default DRX cycle;
   the eighth sub-target cycle is configured by the network-side device, or the eighth sub-target cycle is determined according to one of the following:
      at least one of the seventh sub-target cycle and the ninth sub-target cycle;
      a smaller value in an RAN DRX cycle and the default DRX cycle;
      a larger value in the RAN DRX cycle and the default DRX cycle; and
      an eleventh DRX cycle, where the eleventh DRX cycle is one indicated by the network-side device in the RAN DRX cycle and the default DRX cycle, or the eleventh DRX cycle is one selected by the terminal in the RAN DRX cycle and the default DRX cycle, or the eleventh DRX cycle is one agreed upon by a protocol in the RAN DRX cycle and the default DRX cycle;
      the ninth sub-target cycle is configured by the network-side device, or the ninth sub-target cycle is determined according to one of the following:
         at least one of the seventh sub-target cycle and the eighth sub-target cycle;
         a minimum value in the CN DRX cycle, the RAN DRX cycle, and the default DRX cycle;
         a maximum value in the CN DRX cycle, the RAN DRX cycle, and the default DRX cycle; and
         a twelfth DRX cycle, where the twelfth DRX cycle is one indicated by the network-side device in the CN DRX cycle, the RAN DRX cycle, and the default DRX cycle, or the twelfth DRX cycle is one selected by the terminal in the CN DRX cycle, the RAN DRX cycle, and the default DRX cycle, or the twelfth DRX cycle is one agreed upon by a protocol in the CN DRX cycle, the RAN DRX cycle, and the default DRX cycle; and
         the tenth sub-target cycle is configured by the network-side device, or the tenth sub-target cycle is determined according to at least one of the seventh sub-target cycle, the eighth sub-target cycle, and the ninth sub-target cycle.

Optionally, the time domain configuration of the positioning reference signal includes at least one of the following:
the cycle of the positioning reference signal;
a time domain offset of the positioning reference signal; and
time domain information of the positioning reference signal.

Optionally, the time domain offset of the positioning reference signal includes at least one of the following: a hyper system frame number H-SFN offset of the positioning reference signal; and a slot offset of the positioning reference signal; and
the time domain information of the positioning reference signal includes an H-SFN of a hyper frame in which a start positioning reference signal is located.

Optionally, the H-SFN offset of the positioning reference signal includes an H-SFN offset of the hyper frame in which the start positioning reference signal is located relative to H-SFNO; and
the slot offset of the positioning reference signal includes an offset of a number of a slot in which the start positioning reference signal is located relative to a slot 0 of SFNO of a target H-SFN, where the target H-SFN is a number of the hyper frame in which the start positioning reference signal is located.

Optionally, in a case that the cycle of the positioning reference signal is an integer multiple of a hyper frame length, the slot offset of the positioning reference signal is the same in a cycle of each positioning reference signal.

Optionally, the positioning reference signal includes a downlink positioning reference signal, and an H-SFN of the downlink positioning reference signal is an H-SFN of a network-side device that sends the downlink positioning reference signal.

Optionally, the positioning reference signal includes an uplink positioning reference signal, and an H-SFN of the uplink positioning reference signal is obtained by a network-side device.

Optionally, the time domain offset of the positioning reference signal includes an offset of a number of a slot in which the start positioning reference signal is located relative to a slot 0 of SFNO in H-SFNO.

Optionally, the time domain configuration of the positioning reference signal includes a time domain configuration of a positioning reference signal resource or a time domain configuration of a positioning reference signal resource set.

Optionally, the positioning reference signal includes a downlink positioning reference signal, and in a case that a cycle of the downlink positioning reference signal is greater than the first duration, the terminal is not expected to be configured with a cyclic muting pattern.

Optionally, the target configuration includes the second configuration; and
the control module is specifically configured to perform at least one of the following:
performing the downlink positioning reference signal measurement according to a time domain configuration of a downlink positioning reference signal; and
performing the uplink positioning reference signal sending according to a time domain configuration of an uplink positioning reference signal.

Optionally, the target positioning behavior includes the positioning measurement result reporting, and a positioning measurement result reported by the terminal includes a timestamp of at least one positioning measurement;
where the time stamp of the positioning measurement includes at least one of the following:
a first H-SFN, where the first H-SFN is an H-SFN of a hyper frame in which the positioning measurement is located;
a first SFN, where the first SFN is an SFN of a system frame in which the positioning measurement is located, and the first SFN is located in the first H-SFN; and
a first slot index, where the first slot index is a number of a slot in which the positioning measurement is located, and the first slot index is located in the first SFN.

Optionally, the apparatus further includes:
a reporting module, configured to report first capability information, where the first capability information is used to indicate whether the terminal supports an H-SFN.

The positioning processing apparatus in this embodiment of this application may be an electronic device, for example, an electronic device with an operating system, or may be a component, for example, an integrated circuit or a chip, in an electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The positioning processing apparatus provided in this embodiment of this application can implement the processes implemented in the method embodiment in FIG. 3, and achieve same technical effects. To avoid repetition, details are not described herein again.

Optionally, as shown in FIG. 5, an embodiment of this application further provides a communication device 500, including a processor 501 and a memory 502. The memory 502 stores a program or instructions capable of running on the processor 501. When being executed by the processor 501, the program or the instructions implement the steps of the foregoing positioning processing method embodiments, and can achieve the same technical effects. To avoid repetition, details are not described herein again.

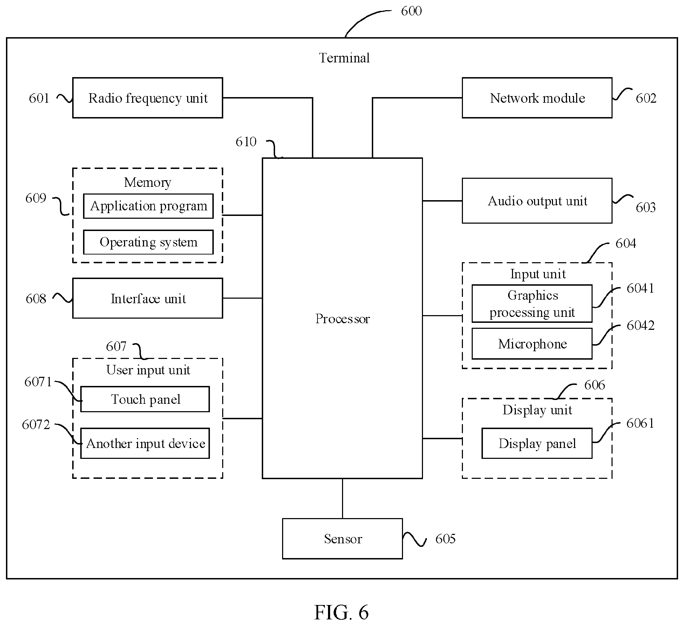

An embodiment of this application further provides a terminal, including a processor and a communication interface, where the processor is configured to control a target positioning behavior according to a target configuration; where the target configuration includes at least one of a first configuration and a second configuration, the first configuration includes at least one of a DRX configuration of the terminal, an eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection. This terminal embodiment corresponds to the foregoing terminal-side method embodiments. Each implementing process and implementation of the foregoing method embodiments may be applicable to this terminal embodiment, and the same technical effects can be achieved. Specifically, FIG. 6 is a schematic structural diagram of hardware of a terminal for implementing an embodiment of this application.

The terminal 600 includes but is not limited to at least some components of a radio frequency unit 601, a network module 602, an audio output unit 603, an input unit 604, a sensor 605, a display unit 606, a user input unit 607, an interface unit 608, a memory 609, a processor 610, and the like.

A person skilled in the art may understand that, the terminal 600 may further include a power supply (for example, a battery) that supplies power to each component. The power supply may be logically connected to the processor 610 by using a power management system, so as to implement functions such as charging management, discharging management, and power consumption management by using the power management system. The structure of the terminal shown in FIG. 6 does not constitute a limitation on the terminal. The terminal may include more or fewer components than those shown in the figure, or combine some components, or have different component arrangements. Details are not described herein again.

It should be understood that, in this embodiment of this application, the input unit 604 may include a graphics processing unit (Graphics Processing Unit, GPU) 6041 and a microphone 6042. The graphics processor 6041 processes image data of a still picture or a video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 or another input device 6072. The touch panel 6071 is also referred to as a touchscreen. The touch panel 6071 may include two parts: a touch detection apparatus and a touch controller. The another input device 6072 may include but is not limited to a physical keyboard, a function key (such as a volume control key or an on/off key), a trackball, a mouse, and an operating lever. Details are not described herein again.

In this embodiment of this application, after receiving downlink data from a network-side device, the radio frequency unit 601 may transmit the downlink data to the processor 610 for processing. In addition, the radio frequency unit 601 may send uplink data to a network-side device. Generally, the radio frequency unit 601 includes but is not limited to an antenna, an amplifier, a transceiver, a coupler, a low-noise amplifier, a duplexer, and the like.

The memory 609 may be configured to store a software program or instructions and various types of data. The memory 609 may mainly include a first storage area for storing a program or instructions and a second storage area for storing data. The first storage area may store an operating system, an application program or instructions required by at least one function (for example, a sound play function or an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 may include one or more processing units. Optionally, the processor 610 integrates an application processor and a modem processor. The application processor mainly processes operations related to an operating system, a user interface, an application program, and the like. The modem processor mainly processes a wireless communication signal, such as a baseband processor. It may be understood that, the foregoing modem processor may not be integrated into the processor 610.

The processor 610 is configured to control a target positioning behavior according to a target configuration; where the target configuration includes at least one of a first configuration and a second configuration, the first configuration includes at least one of a DRX configuration of the terminal, an eDRX configuration of the terminal, and a time window configuration related to the target positioning behavior, the second configuration includes a time domain configuration of a positioning reference signal related to the target positioning behavior, a cycle of the positioning reference signal is greater than first duration, and the target positioning behavior includes at least one of downlink positioning reference signal measurement, uplink positioning reference signal sending, positioning measurement result reporting, and positioning triggered event detection.

In the embodiments of this application, a terminal controls a target positioning behavior according to at least one of a DRX configuration and an eDRX configuration of the terminal, a time window configuration related to the target positioning behavior, and a time domain configuration of a positioning reference signal related to the target positioning behavior, where a cycle of the positioning reference signal is greater than first duration, and the target positioning behavior includes at least one of downlink positioning reference signal measurement, uplink positioning reference signal sending, positioning measurement result reporting, and positioning triggered event detection, so that power consumption of terminal positioning can be reduced.

It may be understood that the radio frequency unit 601 and the processor 610 in this embodiment may implement processes in the foregoing positioning processing method embodiments, and same technical effects can be achieved. To avoid repetition, details are not described herein again.

An embodiment of this application further provides a readable storage medium. The readable storage medium stores a program or instructions. When the program or the instructions are executed by a processor, the processes in the foregoing positioning processing method embodiment are implemented, and same technical effects can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing positioning processing method embodiment, and same technical effects can be achieved. To avoid repetition, details are not described herein again.

It should be understood that, the chip mentioned in this embodiment of this application may also be referred to as a system-level chip, a system chip, a chip system, or a system on chip.

An embodiment of this application further provides a computer program/program product. The computer program/program product is stored in a storage medium. The computer program/program product is executed by at least one processor to implement the processes in the foregoing positioning processing method embodiment, and same technical effects can be achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A positioning processing method, comprising:
controlling, by a terminal, a target positioning behavior according to a target configuration;
wherein the target configuration comprises at least one of a first configuration and a second configuration, the first configuration comprises at least one of a discontinuous reception DRX configuration of the terminal, an extended discontinuous reception eDRX configuration of the terminal, and a time window configuration related to the target positioning behavior, the second configuration comprises a time domain configuration of a positioning reference signal related to the target positioning behavior, a cycle of the positioning reference signal is greater than first duration, and the target positioning behavior comprises at least one of downlink positioning reference signal measurement, uplink positioning reference signal sending, positioning measurement result reporting, and positioning triggered event detection.

2. The method according to claim 1, wherein the target configuration comprises the first configuration; and
the controlling, by a terminal, a target positioning behavior according to a target configuration comprises at least one of the following:
determining, by the terminal according to the first configuration, whether to perform the target positioning behavior; and
determining, by the terminal according to the first configuration, a first cycle for performing the target positioning behavior.

3. The method according to claim 2, wherein the target positioning behavior is performed once in each first cycle.

4. The method according to claim 2, wherein the determining, by the terminal according to the first configuration, whether to perform the target positioning behavior comprises:
in a case that the terminal is in an idle state or an inactive state, if the terminal is configured with a time window related to the target positioning behavior, the terminal is not expected to perform the target positioning behavior beyond the time window.

5. The method according to claim 2, wherein the determining, by the terminal according to the first configuration, whether to perform the target positioning behavior comprises:
in a case that the terminal is in an idle state, if the terminal is configured with core network extended discontinuous reception CN eDRX, and a cycle of the CN eDRX is greater than second duration, the terminal is not expected to perform the target positioning behavior beyond a core network paging time window CN PTW.

6. The method according to claim 2, wherein the determining, by the terminal according to the first configuration, whether to perform the target positioning behavior comprises at least one of the following:
in a case that the terminal is in an inactive state, if the terminal is configured with CN eDRX, a cycle of the CN eDRX is greater than third duration, and the terminal is not configured with radio access network extended discontinuous reception RAN eDRX, the terminal is not expected to perform the target positioning behavior beyond a CN PTW;
in a case that the terminal is in an inactive state, if the terminal is configured with CN eDRX, a cycle of the CN eDRX is greater than third duration, the terminal is configured with radio access network extended discontinuous reception RAN eDRX, and a cycle of the RAN eDRX is less than or equal to fourth duration, the terminal is not expected to perform the target positioning behavior beyond a CN PTW; and
in a case that the terminal is in an inactive state, if the terminal is configured with CN eDRX, a cycle of the CN eDRX is greater than third duration, the terminal is configured with RAN eDRX, and a cycle of the RAN eDRX is greater than fourth duration, the terminal is not expected to perform the target positioning behavior beyond a first time window, wherein the first time window comprises one of the following: a CN PTW, a radio access network paging time window RAN PTW, the CN PTW and the RAN PTW, and an overlapping time window between the CN PTW and the RAN PTW.

7. The method according to claim 1, wherein in a case that the terminal is in an idle state or an inactive state, if the terminal is configured with a time window related to the target positioning behavior, a cycle for performing the target positioning behavior by the terminal comprises at least one of: a cycle for performing the target positioning behavior by the terminal in the time window and a cycle for performing the target positioning behavior by the terminal beyond the time window.

8. The method according to claim 1, wherein a cycle for performing the target positioning behavior by the terminal is related to a target cycle.

9. The method according to claim 8, wherein the cycle for performing the target positioning behavior by the terminal comprises at least one of the following: the target cycle and a second cycle calculated according to the target cycle.

10. The method according to claim 9, wherein the second cycle comprises at least one of the following:
a third cycle, wherein the third cycle is a least common multiple between the target cycle and a configured cycle of a downlink positioning reference signal, and the third cycle is a cycle for performing the downlink positioning reference signal measurement;
a fourth cycle, wherein the fourth cycle is a least common multiple between the target cycle and a configured cycle of an uplink positioning reference signal, and the fourth cycle is a cycle for performing the uplink positioning reference signal sending; and
a fifth cycle, wherein the fifth cycle is a least common multiple between the target cycle and a configured positioning measurement result reporting cycle, and the fifth cycle is a cycle for performing the positioning measurement result reporting.

11. The method according to claim 8, wherein the target cycle is a target DRX cycle.

12. The method according to claim 8, wherein in a case that the terminal is in an idle state and the terminal is not configured with eDRX, the target cycle is configured by a network-side device, or the target cycle is determined according to one of the following:
a smaller value in a CN DRX cycle and a default DRX cycle;
a larger value in the CN DRX cycle and the default DRX cycle; and
a first DRX cycle, wherein the first DRX cycle is one indicated by the network-side device in the CN DRX cycle and the default DRX cycle, or the first DRX cycle is one selected by the terminal in the CN DRX cycle and the default DRX cycle, or the first DRX cycle is one agreed upon by a protocol in the CN DRX cycle and the default DRX cycle.

13. The method according to claim 8, wherein in a case that the terminal is in an idle state and the terminal is configured with CN eDRX, if a cycle of the CN eDRX is less than or equal to fifth duration, the target cycle is the cycle of the CN eDRX.

14. The method according to claim 8, wherein in a case that the terminal is in an idle state and the terminal is configured with CN eDRX, if a cycle of the CN eDRX is greater than fifth duration, the target cycle comprises at least one of a first sub-target cycle and a second sub-target cycle, the first sub-target cycle is related to a cycle for performing the target positioning behavior by the terminal within a PTW, and the second sub-target cycle is related to a cycle for performing the target positioning behavior by the terminal beyond the PTW;
wherein the first sub-target cycle is configured by a network-side device, or the first sub-target cycle is determined according to one of the following:
a smaller value in a CN DRX cycle and a default DRX cycle;
a larger value in the CN DRX cycle and the default DRX cycle; and
a second DRX cycle, wherein the second DRX cycle is one indicated by the network-side device in the CN DRX cycle and the default DRX cycle, or the second DRX cycle is one selected by the terminal in the CN DRX cycle and the default DRX cycle, or the second DRX cycle is one agreed upon by a protocol in the CN DRX cycle and the default DRX cycle; and
the second sub-target cycle is configured by the network-side device, or the second sub-target cycle is determined according to one of the following:
the first sub-target cycle;
the smaller value in the CN DRX cycle and the default DRX cycle;
the larger value in the CN DRX cycle and the default DRX cycle; and
a third DRX cycle, wherein the third DRX cycle is one indicated by the network-side device in the CN DRX cycle and the default DRX cycle, or the third DRX cycle is one selected by the terminal in the CN DRX cycle and the default DRX cycle, or the third DRX cycle is one agreed upon by a protocol in the CN DRX cycle and the default DRX cycle.

15. The method according to claim 8, wherein in a case that the terminal is in an inactive state and the terminal is not configured with CN eDRX and RAN eDRX, the target cycle is configured by a network-side device or the target cycle is determined according to one of the following:
a minimum value in a CN DRX cycle, a RAN DRX cycle, and a default DRX cycle;
a maximum value in the CN DRX cycle, the RAN DRX cycle, and the default DRX cycle; and
a fourth DRX cycle, wherein the fourth DRX cycle is one indicated by the network-side device in the CN DRX cycle, the RAN DRX cycle, and the default DRX cycle, or the fourth DRX cycle is one selected by the terminal in the CN DRX cycle, the RAN DRX cycle, and the default DRX cycle, or the fourth DRX cycle is one agreed upon by a protocol in the CN DRX cycle, the RAN DRX cycle, and the default DRX cycle.

16. The method according to claim 8, wherein in a case that the terminal is in an inactive state, and the terminal is configured with CN eDRX and is not configured with RAN eDRX, if a cycle of the CN eDRX is less than or equal to sixth duration, the target cycle is configured by a network-side device or the target cycle is determined according to one of the following:
a smaller value in the cycle of the CN eDRX and a RAN DRX cycle;
a larger value in the cycle of the CN eDRX and the RAN DRX cycle; and
a fifth DRX cycle, wherein the fifth DRX cycle is one indicated by the network-side device in the cycle of the CN eDRX and the RAN DRX cycle, or the fifth DRX cycle is one selected by the terminal in the cycle of the CN eDRX and the RAN DRX cycle, or the fifth DRX cycle is one agreed upon by a protocol in the cycle of the CN eDRX and the RAN DRX cycle.

17. The method according to claim 8, wherein in a case that the terminal is in a deactivated state, and the terminal is configured with CN eDRX and is not configured with RAN eDRX, if the cycle of the CN eDRX is greater than sixth duration, the target cycle comprises at least one of a third sub-target cycle and a fourth sub-target cycle, the third sub-target cycle is related to a cycle for performing the target positioning behavior by the terminal within a CN PTW, and the fourth sub-target cycle is related to a cycle for performing the target positioning behavior by the terminal beyond the CN PTW;
wherein the third sub-target cycle is configured by a network-side device, or the third sub-target cycle is determined according to one of the following:
a minimum value in a CN DRX cycle, a RAN DRX cycle, and a default DRX cycle;
a maximum value in the CN DRX cycle, the RAN DRX cycle, and the default DRX cycle; and
a sixth DRX cycle, wherein the sixth DRX cycle is one indicated by the network-side device in the CN DRX cycle, the RAN DRX cycle, and the default DRX cycle, or the sixth DRX cycle is one selected by the terminal in the CN DRX cycle, the RAN DRX cycle, and the default DRX cycle, or the sixth DRX cycle is one agreed upon by a protocol in the CN DRX cycle, the RAN DRX cycle, and the default DRX cycle; and
the fourth sub-target cycle is the RAN DRX cycle, or the fourth sub-target cycle is configured by the network-side device, or the fourth sub-target cycle is determined according to one of the following:
the third sub-target cycle;
the maximum value in the CN DRX cycle, the RAN DRX cycle, and the default DRX cycle; and
a seventh DRX cycle, wherein the seventh DRX cycle is one indicated by the network-side device in the CN DRX cycle, the RAN DRX cycle, and the default DRX cycle, or the seventh DRX cycle is one selected by the terminal in the CN DRX cycle, the RAN DRX cycle, and the default DRX cycle, or the seventh DRX cycle is one agreed upon by a protocol in the CN DRX cycle, the RAN DRX cycle, and the default DRX cycle.

18. The method according to claim 8, wherein in a case that the terminal is in an inactive state, and the terminal is configured with CN eDRX and is configured with RAN eDRX, if a cycle of the CN eDRX is less than or equal to seventh duration and a cycle of the RAN eDRX is less than or equal to eighth duration, the target cycle is configured by a network-side device or the target cycle is determined according to one of the following:
a smaller value in the cycle of the CN eDRX and the cycle of the RAN eDRX;
a larger value in the cycle of the CN eDRX and the cycle of the RAN eDRX; and
an eighth DRX cycle, wherein the eighth DRX cycle is one indicated by the network-side device in the cycle of the CN eDRX and the cycle of the RAN eDRX, or the eighth DRX cycle is one selected by the terminal in the cycle of the CN eDRX and the cycle of the RAN eDRX, or the eighth DRX cycle is one agreed upon by a protocol in the cycle of the CN eDRX and the cycle of the RAN eDRX.

19. The method according to claim 8, wherein in a case that the terminal is in an inactive state, and the terminal is configured with CN eDRX and is configured with RAN eDRX, if a cycle of the CN eDRX is greater than seventh duration and a cycle of the RAN eDRX is less than or equal to eighth duration, the target cycle comprises at least one of a fifth sub-target cycle and a sixth sub-target cycle, the fifth sub-target cycle is related to a cycle for performing the target positioning behavior by the terminal within a CN PTW, and the sixth sub-target cycle is related to a cycle for performing the target positioning behavior by the terminal beyond the CN PTW;
wherein the fifth sub-target cycle is configured by a network-side device, or the fifth sub-target cycle is determined according to one of the following:
a minimum value in the CN DRX cycle, the cycle of the RAN eDRX, and a default DRX cycle;
a maximum value in the CN DRX cycle, the cycle of the RAN eDRX, and the default DRX cycle; and
a ninth DRX cycle, wherein the ninth DRX cycle is one indicated by the network-side device in the CN DRX cycle, the cycle of the RAN eDRX, and the default DRX cycle, or the ninth DRX cycle is one selected by the terminal in the CN DRX cycle, the cycle of the RAN eDRX, and the default DRX cycle, or the ninth DRX cycle is one agreed upon by a protocol in the CN DRX cycle, the cycle of the RAN eDRX, and the default DRX cycle; and
the sixth sub-target cycle is the cycle of the RAN eDRX, or the sixth sub-target cycle is configured by the network-side device, or the sixth sub-target cycle is determined according to one of the following:
the fifth sub-target cycle;
the maximum value in the CN DRX cycle, the cycle of the RAN eDRX, and the default DRX cycle; and
a tenth DRX cycle, wherein the tenth DRX cycle is one indicated by the network-side device in the CN DRX cycle, the cycle of the RAN eDRX, and the default DRX cycle, or the tenth DRX cycle is one selected by the terminal in the CN DRX cycle, the cycle of the RAN eDRX, and the default DRX cycle, or the tenth DRX cycle is one agreed upon by a protocol in the CN DRX cycle, the cycle of the RAN eDRX, and the default DRX cycle.

20. The method according to claim 8, wherein in a case that the terminal is in an inactive state, and the terminal is configured with CN eDRX and is configured with RAN eDRX, if a cycle of the CN eDRX is greater than seventh duration and the cycle of the RAN eDRX is greater than eighth duration, the target cycle comprises at least one of a seventh sub-target cycle, an eighth sub-target cycle, a ninth sub-target cycle, and a tenth sub-target cycle;
the seventh sub-target cycle is related to a cycle for performing the target positioning behavior by the terminal within a second time window, the eighth sub-target cycle is related to a cycle for performing the target positioning behavior by the terminal within a third time window, the ninth sub-target cycle is related to a cycle for performing the target positioning behavior by the terminal within a fourth time window, the tenth sub-target cycle is related to a cycle for performing the target positioning behavior by the terminal beyond a fifth time window, the second time window is located within a CN PTW and located beyond a RAN PTW, the third time window is located beyond the CN PTW and located within the RAN PTW, the fourth time window is an overlapping time window between the CN PTW and the RAN PTW, and the fifth time window comprises the CN PTW and the RAN PTW;
wherein the seventh sub-target cycle is configured by a network-side device, or the seventh sub-target cycle is determined according to one of the following:
at least one of the eighth sub-target cycle and the ninth sub-target cycle;
a smaller value in a CN DRX cycle and a default DRX cycle;
a larger value in the CN DRX cycle and the default DRX cycle; and
an eleventh DRX cycle, wherein the eleventh DRX cycle is one indicated by the network-side device in the CN DRX cycle and the default DRX cycle, or the eleventh DRX cycle is one selected by the terminal in the CN DRX cycle and the default DRX cycle, or the eleventh DRX cycle is one agreed upon by a protocol in the CN DRX cycle and the default DRX cycle;
the eighth sub-target cycle is configured by the network-side device, or the eighth sub-target cycle is determined according to one of the following:
at least one of the seventh sub-target cycle and the ninth sub-target cycle;
a smaller value in an RAN DRX cycle and the default DRX cycle;
a larger value in the RAN DRX cycle and the default DRX cycle; and
an eleventh DRX cycle, wherein the eleventh DRX cycle is one indicated by the network-side device in the RAN DRX cycle and the default DRX cycle, or the eleventh DRX cycle is one selected by the terminal in the RAN DRX cycle and the default DRX cycle, or the eleventh DRX cycle is one agreed upon by a protocol in the RAN DRX cycle and the default DRX cycle;
the ninth sub-target cycle is configured by the network-side device, or the ninth sub-target cycle is determined according to one of the following:
at least one of the seventh sub-target cycle and the eighth sub-target cycle;
a minimum value in the CN DRX cycle, the RAN DRX cycle, and the default DRX cycle;
a maximum value in the CN DRX cycle, the RAN DRX cycle, and the default DRX cycle; and
a twelfth DRX cycle, wherein the twelfth DRX cycle is one indicated by the network-side device in the CN DRX cycle, the RAN DRX cycle, and the default DRX cycle, or the twelfth DRX cycle is one selected by the terminal in the CN DRX cycle, the RAN DRX cycle, and the default DRX cycle, or the twelfth DRX cycle is one agreed upon by a protocol in the CN DRX cycle, the RAN DRX cycle, and the default DRX cycle; and
the tenth sub-target cycle is configured by the network-side device, or the tenth sub-target cycle is determined according to at least one of the seventh sub-target cycle, the eighth sub-target cycle, and the ninth sub-target cycle.

21. The method according to claim 1, wherein the time domain configuration of the positioning reference signal comprises at least one of the following:
the cycle of the positioning reference signal;
a time domain offset of the positioning reference signal; and
time domain information of the positioning reference signal.

22. The method according to claim 21, wherein the time domain offset of the positioning reference signal comprises at least one of the following: a hyper system frame number H-SFN offset of the positioning reference signal; and a slot offset of the positioning reference signal; and
the time domain information of the positioning reference signal comprises an H-SFN of a hyper frame in which a start positioning reference signal is located.

23. The method according to claim 22, wherein the H-SFN offset of the positioning reference signal comprises an H-SFN offset of the hyper frame in which the start positioning reference signal is located relative to H-SFN0; and
the slot offset of the positioning reference signal comprises an offset of a number of a slot in which the start positioning reference signal is located relative to a slot 0 of SFN0 of a target H-SFN, wherein the target H-SFN is a number of the hyper frame in which the start positioning reference signal is located.

24. The method according to claim 22, wherein in a case that the cycle of the positioning reference signal is an integer multiple of a hyper frame length, the slot offset of the positioning reference signal is the same in a cycle of each positioning reference signal.

25. The method according to claim 22, wherein the positioning reference signal comprises a downlink positioning reference signal, and an H-SFN of the downlink positioning reference signal is an H-SFN of a network-side device that sends the downlink positioning reference signal.

26. The method according to claim 22, wherein the positioning reference signal comprises an uplink positioning reference signal, and an H-SFN of the uplink positioning reference signal is obtained by a network-side device.

27. The method according to claim 22, wherein the time domain offset of the positioning reference signal comprises an offset of a number of a slot in which the start positioning reference signal is located relative to a slot 0 of SFN0 in H-SFN0.

28. The method according to claim 21, wherein the time domain configuration of the positioning reference signal comprises a time domain configuration of a positioning reference signal resource or a time domain configuration of a positioning reference signal resource set.

29. The method according to claim 21, wherein the positioning reference signal comprises a downlink positioning reference signal, and in a case that a cycle of the downlink positioning reference signal is greater than the first duration, the terminal is not expected to be configured with a cyclic muting pattern.

30. The method according to claim 1, wherein the target configuration comprises the second configuration; and
the controlling, by a terminal, a target positioning behavior according to a target configuration comprises at least one of the following:
performing, by the terminal, the downlink positioning reference signal measurement according to a time domain configuration of a downlink positioning reference signal; and
performing, by the terminal, the uplink positioning reference signal sending according to a time domain configuration of an uplink positioning reference signal.

31. The method according to claim 1, wherein the target positioning behavior comprises the positioning measurement result reporting, and a positioning measurement result reported by the terminal comprises a timestamp of at least one positioning measurement;
wherein the timestamp of the positioning measurement comprises at least one of the following:
a first H-SFN, wherein the first H-SFN is an H-SFN of a hyper frame in which the positioning measurement is located;
a first SFN, wherein the first SFN is an SFN of a system frame in which the positioning measurement is located, and the first SFN is located in the first H-SFN; and
a first slot index, wherein the first slot index is a number of a slot in which the positioning measurement is located, and the first slot index is located in the first SFN.

32. The method according to claim 1, further comprising:
reporting, by the terminal, first capability information, wherein the first capability information is used to indicate whether the terminal supports an H-SFN.

33. A positioning processing apparatus, comprising:
a control module, configured to control a target positioning behavior according to a target configuration;
wherein the target configuration comprises at least one of a first configuration and a second configuration, the first configuration comprises at least one of a discontinuous reception DRX configuration of a terminal, an extended discontinuous reception eDRX configuration of the terminal, and a time window configuration related to the target positioning behavior, the second configuration comprises a time domain configuration of a positioning reference signal related to the target positioning behavior, a cycle of the positioning reference signal is greater than first duration, and the target positioning behavior comprises at least one of downlink positioning reference signal measurement, uplink positioning reference signal sending, positioning measurement result reporting, and positioning triggered event detection.

34. The apparatus according to claim 33, wherein the target configuration comprises the first configuration; and
the control module is specifically configured to perform at least one of the following:
determining, according to the first configuration, whether to perform the target positioning behavior; and
determining, according to the first configuration, a first cycle for performing the target positioning behavior, and performing the target positioning behavior according to the first cycle.

35. A terminal, comprising a processor and a memory, wherein the memory stores a program or instructions capable of running on the processor, and the program or the instructions are executed by the processor to implement the steps of the positioning processing method according to any one of claims 1 to 32.

36. A readable storage medium, wherein the readable storage medium stores a program or instructions, and when executed by a processor, the program or the instructions implement the steps of the positioning processing method according to any one of claims 1 to 32.
